# EUROPÄISCHE PATENTSCHRIFT

(11) **EP 3 286 256 B1**
(45) Veröffentlichungstag und Bekanntmachung des Hinweises auf die Patenterteilung: **26.06.2019**
(21) Anmeldenummer: 16718332.6
(22) Anmeldetag: 22.04.2016
(51) Int. Cl.: C08L 25/12, C08J 5/08, C03C 25/26, C08J 5/04, C08K 3/40, C08K 7/14, C08K 9/06, B32B 5/00

(54) **TRANSLUZENTE FASERVERBUND-WERKSTOFFE AUS CHEMISCH MODIFIZIERTEN POLYMEREN**
TRANSLUCENT FIBRE COMPOSITE MATERIALS COMPRISING CHEMICALLY MODIFIED POLYMERS
MATÉRIAU COMPOSITE TRANSLUCIDE À BASE DE FIBRES EN POLYMÈRES MODIFIÉS CHIMIQUEMENT

(30) Priorität: 22.04.2015 DE 102015207372; 24.03.2016 EP 16162362
(43) Veröffentlichungstag der Anmeldung: 28.02.2018
(73) Patentinhaber: INEOS Styrolution Group GmbH, 60325 Frankfurt (DE)
(72) Erfinder: NIESSNER, Norbert, 67159 Friedelsheim (DE); DEITMERG, Philipp, 57392 Schmallenberg (DE); JAHNKE, Eike, 1180 Aubonne (CH); BLINZLER, Marko, 68199 Mannheim (DE); BERNHARDT, Achim, 63512 Hainburg (DE); SCHULZ, Tobias, 51103 Köln (DE)
(74) Vertreter: Jacobi, Markus Alexander
(86) Internationale Anmeldenummer: PCT/EP2016/058991
(87) Internationale Veröffentlichungsnummer: WO 2016/170103

(56) Entgegenhaltungen:
- WO-A1-2008/110539
- DE-A1- 3 324 909
- US-A- 4 344 906

## Beschreibung

Die vorliegende Erfindung betrifft einen Faserverbund-Werkstoff W mit erhöhter Lichtdurchlässigkeit und/oder verbesserter mechanischer Festigkeit, der ein Copolymer C umfassend Monomere A-I enthält, wobei A-I mit funktionellen Gruppen B-I der Oberfläche von in den Faserverbund-Werkstoff W eingebetteten Fasern B kovalente Bindungen eingeht, und der Faserverbund-Werkstoff W dabei eine höhere Lichtdurchlässigkeit und/oder verbesserte mechanische Festigkeit zeigt als ein entsprechender Faserverbund-Werkstoff W, bei dem das Copolymer C (bzw. C') kein A-I (als Baustein) enthält. Zudem umfasst die vorliegende Erfindung ein Verfahren zur Herstellung eines Faserverbund-Werkstoffs W mit erhöhter Lichtdurchlässigkeit und/oder verbesserter mechanischer Festigkeit.

Faserverbund-Werkstoffe (faserverstärkte Verbundwerkstoffe oder "Organobleche") bestehen aus zahlreichen Verstärkungsfasern, die in eine Polymermatrix eingebettet sind. Die Einsatzbereiche von Faserverbund-Werkstoffen sind vielfältig. Beispielsweise kommen Faserverbund-Werkstoffe im Fahrzeug- und Luftfahrt-Bereich zum Einsatz. Hierbei sollen Faserverbund-Werkstoffe das Zerreißen oder die sonstige Fragmentierung der Matrix verhindern, um so die Unfallgefahr durch vagabundierende Bauteilbestandteile zu vermindern. Viele Faserverbund-Werkstoffe sind in der Lage, bei Belastung vergleichsweise hohe Kräfte aufzunehmen, bevor es zum Versagensfall kommt. Gleichzeitig zeichnen sich Faserverbund-Werkstoffe gegenüber herkömmlichen, unverstärkten Materialien durch eine hohe Festigkeit und Steifigkeit bei gleichzeitig niedriger Dichte und weiteren vorteilhaften Eigenschaften, wie beispielsweise guter Alterungs- und Korrosionsbeständigkeit aus.

Festigkeit und Steifigkeit der Faserverbund-Werkstoffe sind dabei an die Belastungsrichtung und Belastungsart anpassbar. Hierbei sind in erster Linie die Fasern für die Festigkeit und Steifigkeit des Faserverbund-Werkstoffs verantwortlich. Zudem bestimmt auch ihre Anordnung die mechanischen Eigenschaften des jeweiligen Faserverbund-Werkstoffs. Die Matrix dient dagegen meist in erster Linie der Verteilung der aufzunehmenden Kräfte auf die einzelnen Fasern und der Beibehaltung der räumlichen Anordnung der Fasern in der gewünschten Orientierung. Da sowohl die Fasern als auch die Matrixmaterialien variierbar sind, kommen zahlreiche Kombinationsmöglichkeiten von Fasern und Matrix-Materialien in Betracht.

Für höchste Anforderungen an Festigkeit und Steifigkeit der Faserverbund-Werkstoffe werden endlosfaserverstärkte Verbunde eingesetzt.

Hierbei begrenzt erst das finale Bauteil die Länge der Fasern, die insbesondere als Gewebe oder Gelege und bei hohem resultierendem Faservolumen-Gehalt eingebracht werden. Damit ergibt sich im Bauteil oder Halbzeug ein hohes Maß an spezifischer Grenzfläche zwischen Fasersystem und Matrix. Im Unterschied zur Imprägnierung von Kurzfasern in Spitzgussprozessen ist eine gute Imprägnierung von Endlosfasern, Geweben oder Gelegen durch die Polymermatrix oft technisch herausfordernder.

Bei der Herstellung von Faserverbund-Werkstoffen spielt auch die Verbindung von Fasern und Matrix zueinander eine wesentliche Rolle. Auch die Festigkeit der Einbettung der Fasern in die Matrix (Faser-Matrix-Haftung) kann erheblichen Einfluss auf die Eigenschaften des Faserverbund-Werkstoffs haben.

Zur Optimierung der Faser-Matrix-Haftung und um eine "geringe chemische Ähnlichkeit" zwischen den Faseroberflächen und der umgebenen Kunststoff-Matrix auszugleichen, werden Verstärkungsfasern regelmäßig vorbehandelt. Hierzu werden der sogenannten Schlichte regelmäßig Haftvermittler zugesetzt. Eine solche Schlichte wird regelmäßig während der Herstellung auf die Faser aufgebracht, um die Weiterverarbeitbarkeit der Fasern (wie Weben, Legen, Nähen) zu verbessern. In einigen Fällen werden Glasfasern auch ohne Schlichte verarbeitet.

Wenn die Schlichte für die spätere Weiterverarbeitung unerwünscht ist, muss sie zudem oft erst in einem zusätzlichen Verfahrensschritt entfernt werden, etwa durch Verbrennen. Dann wird meist für die Herstellung des Faserverbund-Werkstoffs ein weiterer Haftvermittler in einem zusätzlichen Verfahrensschritt aufgebracht. Schlichte und/oder Haftvermittler bilden auf der Oberfläche der Fasern eine Schicht, die die Wechselwirkung der Fasern mit der Umgebung wesentlich mitbestimmen kann. Heute stehen eine Vielzahl unterschiedlicher Haftvermittler zur Verfügung. Der Fachmann wird je nach Anwendungsgebiet, zu verwendender Matrix und zu verwendenden Fasern einen geeigneten Haftvermittler auswählen, der sowohl mit der Matrix als auch mit den Fasern kompatibel ist.

Trotz der vorteilhaften Eigenschaften kann auch ein Faserverbund-Werkstoff einen Sprödbruch erleiden. Daher gibt es im Stand der Technik Ansätze, Faserverbund-Werkstoffe mit einem weiten Belastungsbereich, bei dem der totale Versagensfall möglichst unwahrscheinlich ist, bereitzustellen. Für viele Anwendungen sind jedoch zudem gute optische Eigenschaften, wie die Möglichkeit, mittels der Faserverbund-Werkstoffe Elemente mit glatten Oberflächen (geringer Oberflächenwelligkeit), Dekorationsfähigkeit und hoher Transparenz zu erreichen, gewünscht. Diese optischen Eigenschaften werden bei vielen Faserverbund-Werkstoffen bislang vernachlässigt.

So sind viele Faserverbund-Werkstoffe vergleichsweise wenig transparent und weisen zudem eine durch die Heterogenität von Faser- und Matrixanteilen bedingte unerwünschte Oberflächenwelligkeit (Textur) auf.

WO 2008/058971 beschreibt Formmassen mit vergleichsweise guten mechanischen Eigenschaften. Jedoch werden hierbei zwei Gruppen von Verstärkungsfasern unterschiedlicher Eigenschaften verwendet, wobei die Gruppen von Verstärkungsfasern jeweils mit verschiedenen Haftvermittler-Zusammensetzungen versehen sind, welche die verschiedenen Faser-Matrix-Haftungen bewirken. Zudem müssen die Verstärkungsfasern als komplexe Netzwerke in die Matrix eingebracht werden. Ein solches Vorgehen setzt ein unerwünscht komplexes und arbeitsintensives Herstellungsverfahren voraus. Zudem lehrt WO 2008/058971 nicht die Herstellung von Faserverbund-Werkstoffen mit guten optischen Eigenschaften, wie glatten Oberflächen und hoher Transparenz. WO 2008/058971 lehrt auch nicht die Verstärkung der Biegefestigkeit durch den Aufbau der Verbundwerkstoffe.

WO 2008/119678 beschreibt Glasfaser-verstärkte Polymerzusammensetzungen, welche durch Verwendung von Maleinsäureanhydrid-haltigem Styrol-Copolymer in seinen mechanischen Eigenschaften verbessert werden. Es werden jedoch keine Hinweise auf Faserverbund-Werkstoffe gegeben. Vielmehr wird der Einsatz von Kurzfasern gelehrt. Insbesondere wird nicht gelehrt, wie Faserverbund-Werkstoffe mit guten optischen Eigenschaften, wie glatten Oberflächen und hoher Transparenz, erhalten werden können.

CN102924857 beschreibt Mischungen aus Styrol-Maleinsäureanhydrid-Copolymeren, welche mit Schnittglas gemischt werden und relativ hohe Festigkeiten zeigen. Jedoch ist die Spannungsrissbeständigkeit eines solchen Materials gegenüber Lösungsmitteln gering und die Festigkeit im Vergleich zu Glasfaserverbunden niedrig. Zudem wird nicht gelehrt, wie Faserverbund-Werkstoffe mit guten optischen Eigenschaften, wie glatten Oberflächen und hoher Transparenz erhalten werden können.

CN101555341 beschreibt Mischungen aus Polymerzusammensetzungen, Glasfasern, Maleinsäureanhydrid-haltigen Polymeren und Epoxidharzen. Die Verträglichkeit mit Glasfasern ist durch den hohen Anteil an Epoxygruppen hierbei vergleichsweise gut, jedoch ist die Fließfähigkeit einer solchen Mischung, enthaltend ein (duromeres) Epoxidharz, sehr beschränkt, wodurch die Herstellung von Formkörpern, insbesondere solchen mit guten optischen Eigenschaften, wie glatten Oberflächen und hoher Transparenz, erheblich erschwert wird.

KR100376049 lehrt Mischungen aus Maleinsäureanhydrid- und N-Phenylmaleinimidhaltigem Copolymer, Glasfasern und einem Aminosilan-basierten Kupplungsagenz. Die Notwendigkeit der Verwendung eines solchen Kupplungsagenzes ist jedoch nicht wünschenswert, da sie einen zusätzlichen Verarbeitungsschritt darstellt und die Produktionskosten erhöht. Zudem wird auch hierin nicht gelehrt, wie Faserverbund-Werkstoffe mit guten optischen Eigenschaften, wie glatten Oberflächen und hoher Transparenz, erhalten werden können.

US 2011/0020572 beschreibt Organoblech-Bauteile mit einem Hybrid-Design aus beispielsweise einer hoch fließfähigen Polycarbonat-Komponente. Dabei wird Polycarbonat (PC) durch geeignete Additive fließfähig gemacht, wie über hyperverzweigte Polyester, Ethylen/(Meth)acrylat Copolymere oder niedermolekulare Polyalkylenglykolester.

DE-A 2 160 778 und EP-A 2 251 377 beschreiben Organobleche, die mit einer Aminosilan-Schlichte behandelt sind. Es wird nicht gelehrt, Organobleche bereitzustellen, die besonders lichtdurchlässig sind.

WO 2008/110539 beschreibt Glasfaser-verstärkte Werkstoffe, wobei Komponenten der Polymermatrix über ihre Viskositätszahl charakterisiert sind. US 4,344,906 beschreibt ein Verfahren zur Herstellung von glasfaserverstärkten Gusskörpern.

(Glas-)Fasern werden im Stand der Technik häufig mit einer Schlichte behandelt, welche vor allem die Fasern gegenseitig schützen. Ein gegenseitiges Beschädigen durch Abrieb soll verhindert werden. Beim gegenseitigen mechanischen Einwirken soll es nicht zur Querfragmentierung (Bruchbildung) kommen.

Ferner kann mittels der Schlichte der Schneidevorgang der Faser erleichtert werden, um vor allem eine gleiche Stapellänge zu erhalten. Daneben kann durch die Schlichte eine Agglomeration der Fasern vermieden werden. Die Dispergierbarkeit von Kurzfasern in Wasser kann verbessert werden. Somit ist es möglich, gleichmäßige Flächengebilde nach dem Nasslegeverfahren zu erhalten.

Eine Schlichte kann dazu beitragen, dass ein verbesserter Zusammenhalt zwischen den Glasfasern und der Polymer-Matrix, in welcher die Glasfasern als Verstärkungsfasern wirken, hergestellt wird. Dieses Prinzip findet vor allem bei den glasfaserverstärken Kunststoffen (GFK) Anwendung.

Bislang enthalten die Glasfaser-Schlichten generell eine große Anzahl an Bestandteilen, wie beispielsweise Filmbildner, Gleitmittel, Netzmittel und Haftvermittler. Ein Filmbildner schützt die Glasfilamente vor gegenseitiger Reibung und kann zusätzlich eine Affinität zu Kunstharzen verstärken, um somit die Festigkeit und den Zusammenhalt eines Verbundwerkstoffes zu fördern.

Stärkederivate, Polymere und Copolymer von Vinylacetat und Acrylestern, Epoxidharz-Emulsionen, Polyurethanharze und Polyamide mit einem Anteil von 0,5 bis 12 Gew.-%, bezogen auf die gesamte Schlichte, sind zu nennen.

Ein Gleitmittel verleiht den Glasfasern und deren Produkten Geschmeidigkeit und vermindert die gegenseitige Reibung der Glasfasern, sowie bei der Herstellung. Oftmals wird jedoch die Haftung zwischen Glas und Kunstharz durch die Verwendung von Gleitmitteln beeinträchtigt. Fette, Öle und Polyalkylenamine in einer Menge von 0,01 bis 1 Gew.-%, bezogen auf die gesamte Schlichte, sind zu nennen.

Ein Netzmittel bewirkt eine Herabsetzung der Oberflächenspannung und eine verbesserte Benetzung der Filamente mit der Schlichte. Für wässrige Schlichten sind beispielsweise Polyfettsäureamide mit einer Menge von 0,1 bis 1,5 Gew.-%, bezogen auf die gesamte Schlichte, zu nennen.

Oftmals existiert keine geeignete Affinität zwischen der Polymer-Matrix und den Glasfasern. Diese Überbrückung können Haftvermittler übernehmen, welche die Adhäsion von Polymeren an der Faseroberfläche erhöhen. Die meisten organofunktionellen Silane, wie beispielsweise Aminopropyltriethoxysilan, Methacryloxypropyltrimethoxysilan, Glycidyloxypropyltrimethoxysilan und ähnliche sind zu nennen.

Silane, welche einer wässrigen Schlichte zugesetzt werden, werden meist zu Silanolen hydrolysiert. Diese Silanole können dann mit reaktiven (Glas-)Faseroberflächen reagieren und somit eine Haftmittelschicht (mit einer Dicke von ca. 3 nm) bilden.

Folglich können niedermolekulare, funktionale Agenzien mit Silanolgruppen auf der Glasoberfläche reagieren, wobei diese niedermolekularen Agenzien anschließend weiterreagieren (beispielsweise in Epoxidharzen) und dabei für eine chemische Anbindung der Glasfaser an die Polymer-Matrix sorgen. Eine solche Herstellung ist jedoch zeitaufwändig und dauert bis zur vollständigen Aushärtung der Polymere (beispielsweise der oben genannten Epoxidharze) ungefähr zwischen 30 Minuten bis über eine Stunde.

Es erscheint daher wünschenswert, in einem verbesserten Verfahren bereits polymerisierte Schmelzen in Verbindung mit Glasfasern oder anderen Verstärkungsfasern zu bringen.

Eine Funktionalisierung durch Umsetzung mit Polymeren ist ebenfalls bekannt. So gelingt es, durch Verwendung niedermolekularer Polycarbonat-Typen das Glasfasergewebe bzw. -gelege gut zu tränken und durch Reaktion von funktionellen Gruppen auf der Glasfaseroberfläche mit dem Polycarbonat eine "Pfropfung" durchzuführen, welche die Verträglichkeit zum Polymer erhöht. Diese Verfahrensweise hat jedoch den Nachteil, dass Polycarbonat (PC) eine sehr hohe Viskosität besitzt und für diesen Imprägnierungs-Schritt niedermolekulares, d.h. niedrigviskoses PC eingesetzt werden muss, welches eine äußerst schlechte Gebrauchstauglichkeit, wie beispielsweise eine geringe Resistenz gegenüber Spannungsriss auslösenden Agenzien, wie polare Lösungsmittel, aufweist.

Im Hinblick auf den Stand der Technik liegt eine technische Aufgabe darin, einen gut zu verarbeitenden, gegen eine Vielzahl an Lösungsmittel weitgehend inerten, gut spannungsrissbeständigen und (biege)festen Verbundwerkstoff bereitzustellen, der möglichst zudem noch gute optische Eigenschaften, wie glatte Oberflächen und hohe Transparenz, aufweist. Idealerweise kommt der Faserverbund-Werkstoff ohne Haftvermittler aus.

Überraschend wurde gefunden, dass der Einsatz eines Copolymers C, das ein mit funktionellen Gruppen B-I auf der Oberfläche der Fasern B kovalent verknüpfte Monomere A-I enthält, zu einem Faserverbund-Werkstoff W mit den gewünschten Eigenschaften führt. Der erhaltene Faserverbund-Werkstoff W weist eine gute Festigkeit auf und ist spannungsriss- und lösungsmittelbeständig.

Zudem lassen sich glatte Oberflächen und Bauteile mit hoher Transparenz daraus herstellen. Auf Haftvermittler kann optional verzichtet werden.

Ein erster Aspekt der vorliegenden Erfindung betrifft einen Faserverbund-Werkstoff W, enthaltend (oder bestehend aus):
(A) als Polymermatrix eine thermoplastische Polymerzusammensetzung A, die enthält (oder besteht aus den folgenden Komponenten):
   (A1) mindestens ein Copolymer C, das Monomere A-I und Monomere A-II und optional weitere Monomere umfasst;
   (A2)optional einen oder mehrere Farbstoffe F; und
   (A3)optional einen oder mehrere Hilfsstoffe H; und
(B) Fasern B, deren Oberfläche funktionelle Gruppen B-I aufweist, die mit den Monomeren A-I, nicht aber mit den Monomeren A-II, eine kovalente Bindung eingehen,
wobei die Lichtdurchlässigkeit des Faserverbund-Werkstoffs W um mindestens 10% höher ist als bei einem vergleichbaren Faserverbund-Werkstoff W, bei dem die Monomere A-I vollständig durch Monomere A-II ersetzt sind.

Optional kann hierbei die Biegefestigkeit des Faserverbund-Werkstoffs W zudem um mindestens 20% höher sein als bei einem vergleichbaren Faserverbund-Werkstoff W, bei dem die Monomere A-I vollständig durch Monomere A-II ersetzt sind.

Wie hierin verwendet wird die Biegefestigkeit der Faserverbund-Werkstoffe in der Regel gemäß Standardverfahren ISO 14125 (DIN EN ISO 14125:2011-05) bestimmt, worauf sich auch die aufgeführten Werte beziehen. Alternativ kann die Biegefestigkeit auch gemäß anderer Standardverfahren wie etwa gemäß ASTM D790 Version 15e2 oder ISO 178 (DIN EN ISO 178:2013-09) ermittelt werden.

Optional kann zusätzlich oder alternativ die Oberflächenwelligkeit des Faserverbund-Werkstoffs W, die von der thermischen Ausdehnung und Verteilung der Einzelkomponenten abhängt, gering sein. So liegt die thermische Ausdehnung der Faserkomponente B bevorzugt bei 0 bis 5 • 10⁻⁶/K, ist daher bevorzugt geringer als bei der Matrix ohne Faserverstärkung, die beim Abkühlen von Verarbeitungs- auf Gebrauchstemperatur eine signifikante Volumenreduktion (thermische Schwindung plus Phasenumwandlung/Kristallisation) erfährt. Für die Bildung der Oberflächenwelligkeit spielt also nicht die thermische Ausdehnung des Verbundwerkstoffs selbst eine (hauptsächliche) Rolle, sondern alleine der Unterschied der Ausdehnung (bei Abkühlung der Schwindung) der Faser-Komponente B (beispielsweise < 10 • 10⁻⁶/K, bevorzugt 0 bis 5 • 10⁻⁶/K) gegenüber der eine thermoplastische Polymerzusammensetzung A enthaltenen Polymermatrix-Komponente, auch bei gleichzeitig wechselnder Verteilung von A und B im Querschnitt.

Gemäß einer bevorzugten Ausführungsform beträgt die Schmelzflussrate (Melt Volume Rate, MVR) der als Polymermatrix eingesetzten thermoplastische Polymerzusammensetzung A 10 bis 70 cm³/10min, bevorzugt 12 bis 70 cm³/10min, insbesondere 15 bis 55 cm³/10 min bei 220°C/10kg (gemessen nach ISO1133, bevorzugt in der am Anmeldetag aktuellsten Version).

Gemäß einer besonders bevorzugten Ausführungsform beträgt die Schmelzflussrate (Melt Volume Rate, MVR) der als Polymermatrix eingesetzten thermoplastische Polymerzusammensetzung A 10 bis 35 cm³/10min, bevorzugt 12 bis 30 cm³/10min, insbesondere 15 bis 25 cm³/10 min bei 220°C/10kg (gemessen nach ISO1133, bevorzugt in der am Anmeldetag aktuellsten Version).

Alternativ kann die Schmelzflussrate (Melt Volume Rate, MVR) der als Polymermatrix eingesetzten thermoplastische Polymerzusammensetzung A 35 bis 70 cm³/10min, bevorzugt 40 bis 60 cm³/10min, insbesondere 45 bis 55 cm³/10 min bei 220°C/10kg (gemessen nach ISO1133, bevorzugt in der am Anmeldetag aktuellsten Version), betragen.

Alternativ oder zusätzlich kann die mittels eines Kapillarviskosimeters ermittelte Viskositätszahl (J = (η/η₀-1) · 1/c) der als Polymermatrix eingesetzten thermoplastische Polymerzusammensetzung A, gemessen bei Raumtemperatut (20°C) für in Dimethylformamid gelöstes Granulat, 50 bis 100 ml/g betragen, bevorzugt 55 bis 85 ml/g. Gemäß einer bevorzugten Ausführungsform beträgt die Viskositätszahl 55 bis 75 ml/g, bevorzugt 60 bis 70 ml/g, insbesondere 61 bis 67 ml/g. Gemäß einer alternativen bevorzugten Ausführungsform beträgt die Viskositätszahl 60 bis 90 ml/g, bevorzugt 65 bis 85 ml/g, insbesondere 75 bis 85 ml/g.

Dem Fachmann sind zahlreiche Verfahren bekannt, die Oberflächenwelligkeit zu bestimmen. So kann etwa mittels Laser-Abtastung die Oberfläche nachgezeichnet werden und dann ausgemessen werden, welcher Höhenunterschied zwischen Wellenmaxima und -minima auftreten.

Unter einer geringen Oberflächenwelligkeit werden im weitesten Sinne mittlere Wellentiefen auf der Oberfläche des Faserverbund-Werkstoffs W von unter 30 µm verstanden. Bevorzugt werden unter einer geringen Oberflächenwelligkeit im weitesten Sinne mittlere Wellentiefen auf der Oberfläche des Faserverbund-Werkstoffs W von unter 15 µm, stärker bevorzugt unter 10 µm, insbesondere unter 7 µm verstanden.

Die vorliegende Erfindung betrifft auch einen Faserverbund-Werkstoff W, enthaltend (oder bestehend aus):
(A) als Polymermatrix eine thermoplastische Polymerzusammensetzung A, die enthält (oder besteht aus den folgenden Komponenten):
   (A1) mindestens ein Copolymer C, das Monomere A-I und Monomere A-II und optional weitere Monomere umfasst;
   (A2) optional einen oder mehrere Farbstoffe F; und
   (A3) optional einen oder mehrere Hilfsstoffe H; und
(B) Fasern B, deren Oberflächen funktionelle Gruppen B-I aufweisen, die mit den Monomeren A-I, nicht aber mit den Monomeren A-II, eine kovalente Bindung eingehen,
wobei die Biegefestigkeit des Faserverbund-Werkstoffs W um mindestens 20% höher ist als bei einem vergleichbaren Faserverbund-Werkstoff W, bei dem die Monomere A-I vollständig durch Monomere A-II ersetzt sind.

Hierbei kann die Lichtdurchlässigkeit des Faserverbund-Werkstoffs W optional um mindestens 10% höher sein als bei einem vergleichbaren Faserverbund-Werkstoff W, bei dem die Monomere A-I vollständig durch Monomere A-II ersetzt sind.

Gemäß einer bevorzugten Ausführungsform betrifft die vorliegende Erfindung einen Faserverbund-Werkstoff W, enthaltend (oder bestehend aus):
(A) als Polymermatrix eine thermoplastische Polymerzusammensetzung A, die enthält (oder besteht aus den folgenden Komponenten):
   (A1) mindestens ein Copolymer C, das Monomere A-I und Monomere A-II und optional weitere Monomere umfasst;
   (A2) optional einen oder mehrere Farbstoffe F; und
   (A3)optional einen oder mehrere Hilfsstoffe H; und
(B) Fasern B, deren Oberflächen funktionelle Gruppen B-I aufweisen, die mit den Monomeren A-I, nicht aber mit den Monomeren A-II, eine kovalente Bindung eingehen,
wobei die Lichtdurchlässigkeit des Faserverbund-Werkstoffs W um mindestens 10% höher ist als bei einem vergleichbaren Faserverbund-Werkstoff W, bei dem die Monomere A-I vollständig durch Monomere A-II ersetzt sind und wobei die Biegefestigkeit des Faserverbund-Werkstoffs W um mindestens 20% höher ist als bei einem vergleichbaren Faserverbund-Werkstoff W, bei dem die Monomere A-I vollständig durch Monomere A-II ersetzt sind.

Die vorliegende Erfindung betrifft auch einen Faserverbund-Werkstoff W, enthaltend (oder bestehend aus):
(A) als Polymermatrix eine thermoplastische Polymerzusammensetzung A, die enthält (oder besteht aus den folgenden Komponenten):
   (A1) mindestens ein Copolymer C, das Monomere A-I und Monomere A-II und optional weitere Monomere umfasst;
   (A2) optional einen oder mehrere Farbstoffe F; und
   (A3) optional einen oder mehrere Hilfsstoffe H; und
(B) Fasern B, deren Oberflächen funktionelle Gruppen B-I aufweisen, die mit den Monomeren A-I, nicht aber mit den Monomeren A-II, eine kovalente Bindung eingehen,
wobei die Oberflächenwelligkeit gering ist. Dabei sind die mittleren Wellentiefen auf der Oberfläche des Faserverbund-Werkstoffs W unter 30 µm, bevorzugt unter 15 µm, stärker bevorzugt unter 10 µm, stärker bevorzugt unter 8 µm, insbesondere unter 7 µm.

Hierbei kann die Lichtdurchlässigkeit des Faserverbund-Werkstoffs W optional um mindestens 10% höher sein als bei einem vergleichbaren Faserverbund-Werkstoff W, bei dem die Monomere A-I vollständig durch Monomere A-II ersetzt sind; und/oder kann die Biegefestigkeit des Faserverbund-Werkstoffs W um mindestens 20% höher sein als bei einem vergleichbaren Faserverbund-Werkstoff W, bei dem die Monomere A-I vollständig durch Monomere A-II ersetzt sind.

Daher kann die Polymermatrix eine Matrix aus amorphem Kunststoff sein, in die die Fasern B als Verstärkungsfasern eingebettet und über eine Faser-Matrix-Haftung mit der Matrix gekoppelt sind. Erfindungsgemäß weist der Faserverbund-Werkstoff W die oben beschriebenen Komponenten A und B auf. Daher sind Fasern B (Verstärkungsfasern) in eine thermoplastische Polymerzusammensetzung A eingebettet.

Lichtdurchlässigkeit ist wie hierin verwendet im weitesten Sinne zu verstehen. Der Fachmann wird erkennen, dass die Lichtdurchlässigkeit, wie experimentell gezeigt, insbesondere die Durchlässigkeit von weißem Tageslicht (oft auch als (tages)lichtweißes oder unbuntes Licht bezeichnet) Betrifft. Bevorzugt ist die Lichtdurchlässigkeit wie hierin verwendet daher die Lichtdurchlässigkeit bei einer Farbtemperatur von 5000 bis 7000 Kelvin (K), stärker bevorzugt bei einer Farbtemperatur von 5000 bis 6700 K, noch stärker bevorzugt bei einer Farbtemperatur von 5300 bis 6500 K, insbesondere bei einer Farbtemperatur von (etwa) 5500 K.

Das weiße Tageslicht wird gemäß einer besonders bevorzugten Ausführungsform mittels einer Lampe nach DIN EN 12464 (etwa Version DIN EN 12464-1:2011) erzeugt werden. Alternativ kann das Tageslicht das Sonnenlicht sein oder mit einer anderen entsprechenden Lampe erzeugt werden.

Beispielhaft kann die Transparenz an 1 mm dicken Proben des Faserverbund-Werkstoffs W gemäß ASTM D 1003 (etwa ASTM D 1003-13) gemessen werden (etwa mittels eines Transparenzmessgeräts (etwa Byk Haze gard i (BYK-Gardner, USA)).

Das Spektrum der Wellenlängen des Lichts, dessen Lichtdurchlässigkeit bestimmt ist, ergibt sich insbesondere bei der Verwendung von Tageslicht bzw. tageslichtartigen Lampen bereits aus der Farbtemperatur. Besonders bevorzugt betrifft die Lichtdurchlässigkeit die Durchlässigkeit von Licht eines Wellenlängenspektrums von (etwa) 280 bis 800 nm, insbesondere 400 nm bis 800 nm (sichtbares Tageslicht), wobei das Licht in seiner Gesamtheit weißes Licht im Sinne von Tageslicht ist. Hierbei stammen bevorzugt mindestens 50%, stärker bevorzugt mindestens 60%, noch stärker bevorzugt mindestens 75%, insbesondere mindestens 90% der Lichtenergie von Photonen des Wellenlängenbereichs zwischen 280 und 800 nm. Zusammenfassend betrifft die Lichtdurchlässigkeit besonders bevorzugt die Durchlässigkeit von Licht einer Farbtemperatur von (etwa) 5500 K wobei mindestens 50%, insbesondere mindestens 90% der Lichtenergie Photonen des Wellenlängenbereichs zwischen 400 und 800 nm zuzuordnen sind.

Beispielhaft kann die Lichtdurchlässigkeit gemessen werden und somit insbesondere verstanden werden als die Durchlässigkeit von Licht der Wellenlänge 400-450 nm, 425-475 nm, 450-500 nm, 475-525 nm, 500-550 nm, 525-575 nm, 550-600 nm, 575-625 nm, 600-650 nm, 625-675 nm, 650-700 nm, 675-725 nm, 700-750 nm, 725-775 nm oder 750-800 nm.

Die Dicke des Faserverbund-Werkstoffs W spielt nach dem Lambert-Beerschen Gesetz keine (nennenswerte) Rolle bei der vergleichenden Bestimmung der prozentualen Lichtdurchlässigkeit. Bevorzugt kann die Bestimmung/Messung bei Faserverbund-Werkstoffen W ("Organoblechen") mit einer Dicke von 0,1 bis 10 mm, stärker bevorzugt 0,2 bis 5 mm, noch stärker bevorzugt 0,5 bis 2 mm, insbesondere (etwa) 1 mm, erfolgen.

Gemäß einer bevorzugten Ausführungsform ist der Faserverbund-Werkstoff W ein (weitgehend) flächiges (planares oder oberflächenstrukturiertes, folienartiges) Organoblech einer Dicke von 0,1 bis 10 mm, stärker bevorzugt 0,2 bis 5 mm, noch stärker bevorzugt 0,5 bis 2 mm, insbesondere (etwa) 1 mm. Alternativ kann der Faserverbund-Werkstoff W auch zur Herstellung von dickeren Formteilen verwendet werden.

Bevorzugt enthält der Faserverbund-Werkstoff W, insbesondere die Polymerzusammensetzung A, keine Anteile an im Bereich von 400 bis 800 nm absorbierenden Farbstoffen), die zu einer Absorption von über 10%, über 20%, über 50%, über 75% oder über 90%, von Tageslicht in einem solchen Faserverbund-Werkstoffen W mit einer Dicke von 1 mm führen. Es wird verstanden werden, dass der vergleichbare Faserverbund-Werkstoff W mit höherer Absorption auch eine vergleichbare, insbesondere gleich, Anteile an Farbstoff(en) enthält wie der erfindungsgemäße Faserverbund-Werkstoff W.

Es wurde festgestellt, dass der Faserverbund-Werkstoff W optional auch eine oder mehrere intransparente Komponenten enthalten kann. Beispielsweise kann der Faserverbund-Werkstoff W optional Farbpigmente (z.B. Industrieruß), Kautschukpartikel (z.B. Pfopfkautschuke (z.B. Polybutadien- und/oder (Meth)acrylat-basierte Pfopfkautschuke wie etwa Acylnitril-Butadien-Styrol-Copolymer (ABS)), (Meth)acrylester-Styrol-Acrylnitril-Copolymer (ASA) usw.)) und/oder Metallpartikel enthalten.

Auch in diesem Fall bleiben positive technische Eigenschaften des erfindungsgemäßen Faserverbund-Werkstoffs W erhalten. So ist bevorzugt etwa die Biegefestigkeit um mindestens 20% höher als bei einem vergleichbaren Faserverbund-Werkstoff W, bei dem die Monomere A-I vollständig durch Monomere A-II ersetzt sind.

Zudem kann die Oberflächenwelligkeit gering und die Oberfläche wie gewünscht glatt sein.

Zudem kann ein Faserverbund-Werkstoff W, auch wenn dieser nicht in seiner Gesamtheit transparent ist, positive optische Eigenschaften aufweisen, etwa bezüglich seines Oberflächenglanzes und Sichtbarkeit eingebetteter Elemente. Beispielhaft ist es regelmäßig gewünscht, dass eingebettete Metallpartikel sichtbar sind und einen metallischen Glanz in dem Material zeigen können. So können etwa Aluminium- oder Goldpartikel eingesetzt werden, die optisch sichtbar bleiben sollen.

Optional wird die Transparenz an einem Werkstück mit 1 mm Durchmesser gemäß DIN 55988 (etwa DIN 55988:2013-04) gemessen.

Gemäß einer bevorzugten Ausführungsform besteht der Faserverbund-Werkstoff W (weitgehend) aus:
(A) einer thermoplastischen Polymerzusammensetzung A als Polymermatrix, die enthält (oder besteht aus den folgenden Komponenten):
   (A1) mindestens ein Copolymer C, das Monomere A-I und Monomere A-II und optional weitere Monomere umfasst;
   (A2)optional einen oder mehrere Farbstoffe F; und
   (A3)optional einen oder mehrere Hilfsstoffe H; und
(B) Fasern B, deren Oberflächen funktionelle Gruppen B-I aufweisen, die mit den Monomeren A-I, nicht aber mit den Monomeren A-II, eine kovalente Bindung eingehen,
wobei die Lichtdurchlässigkeit des Faserverbund-Werkstoffs W um mindestens 10% höher ist als bei einem vergleichbaren Faserverbund-Werkstoff W, bei dem die Monomere A-I vollständig durch Monomere A-II ersetzt sind. wobei die Lichtdurchlässigkeit des Faserverbund-Werkstoffs W um mindestens 10% höher ist als bei einem vergleichbaren Faserverbund-Werkstoff W, bei dem die Monomere A-I vollständig durch Monomere A-II ersetzt sind.

Zusätzlich oder statt der erhöhten Lichtdurchlässigkeit kann hierbei die Biegefestigkeit des Faserverbund-Werkstoffs W zudem um mindestens 20% höher sein als bei einem vergleichbaren Faserverbund-Werkstoff W, bei dem die Monomere A-I vollständig durch Monomere A-II ersetzt sind.

Gemäß einer bevorzugten Ausführungsform besteht der Faserverbund-Werkstoff W aus:
20-99.5 Gew.-% an thermoplastischer Polymerzusammensetzung A;
0,5-80 Gew.-% an Fasern B; und
0-79,5 Gew% an weiteren Polymeren D.

Es wird verstanden werden, dass die Monomere, die das Copolymer C umfasst (daher Monomere A-I, Monomere A-II und optional weitere Monomere), in die polymere Struktur des Copolymers C kovalent eingebunden sind. Typischerweise wird das Copolymer aus diesen Monomeren aufgebaut sein. Es wird von jedem Fachmann verstanden werden, dass es sich daher bei den genannten Monomeren um die monomeren Bauelemente des Copolymers C (daher in die Polymerstruktur eingebundene MonomerReste) handelt. Als sprachliche Vereinfachung werden, wie im Fachgebiet der Polymerchemie üblich, solche monomeren Bauelemente eines Polymers hierin auch dann als Monomere bezeichnet, wenn sie in ein Polymer eingebunden sind.

Auch stellen die Monomere A-I noch solche dar, wenn sie in die polymere Struktur des Copolymers C eingebunden sind und gleichzeitig Bindungen mit den funktionellen Gruppen B-I der Fasern B eingehen.

Ebenso wird verstanden werden, dass die funktionellen Gruppen B-I, die die Fasern B aufweisen, wenn sie mit den Monomeren A-I reagiert haben, eine andere chemische Natur aufweisen werden als die ungebundenen funktionellen Gruppen B-I. So können beispielsweise, wenn die ungebundenen funktionellen Gruppen B-I Hydroxygruppen (-OH) darstellen, die gebundenen funktionellen Gruppen B-I Hydroxygruppen-Abkömmlinge, etwa jeweils ein Teil einer Estergruppe (-O-CO-), sein. Der Fachmann wird verstehen, dass diese reagierten funktionellen Gruppen hierin auch als funktionellen Gruppen B-I verstanden werden. Es wird zudem verstanden werden, dass bei einer vollständigen Bindung der funktionellen Gruppen B-I an die Monomere A-I keine ungebunden funktionellen Gruppen B-I mehr vorliegen.

### Komponente A (Polymermatrix aus thermoplastischer Polymerzusammensetzung A)

Für einen erfindungsgemäßen Faserverbund-Werkstoff W kommen als thermoplastische Polymerzusammensetzung A beliebige Kunststoffe in Frage, die ein Copolymer C enthalten, insbesondere solche, wie sie bereits für die Herstellung von Faserverbund-Werkstoffen bekannt sind.

Bevorzugt wird hierbei ein amorphes Copolymer als Copolymer C eingesetzt. Daher weist Copolymer C bevorzugt (weitgehend) keine kristallinen Strukturen auf. Copolymer C weist zudem bevorzugt über niedrige Schmelzviskosität auf. Bevorzugt weist die gesamte thermoplastische Polymerzusammensetzung A amorphe Eigenschaften (daher (weitgehend) keine Kristallisation) auf. Besonders bevorzugt ist das Copolymer C ein amorphes thermoplastisches Copolymer. Bevorzugt weist die gesamte thermoplastische Polymerzusammensetzung A amorphe, thermoplastische Eigenschaften auf, ist daher schmelzbar und (weitgehend) nicht kristallin. Dadurch ist der Schrumpf der thermoplastische Polymerzusammensetzung A, und daher auch des gesamten Faserverbund-Werkstoffs W, vergleichsweise gering und es können besonders glatte Oberflächen erhalten werden.

Alternativ kann die thermoplastische Polymerzusammensetzung A auch teilkristalline Werkstoffe enthalten. So kommen beispielsweise teilkristalline Copolymere als Copolymer C in Frage. Dann kann die thermoplastische Polymerzusammensetzung A in der Regel ein Blend von amorphen thermoplastischen Polymeren und teilkristallinen Polymeren sein. Die thermoplastische Polymerzusammensetzung A kann etwa ein Blend mit einem oder mehreren Polycarbonat(en) und/oder einem oder mehreren teilkristallinen Polymeren (wie Polyamid) sein, wobei der Anteil teilkristalliner Mischkomponenten an der gesamten Komponente A kleiner als 50 Gew.-% sein sollte.

Erfindungsgemäß enthält die thermoplastische Polymerzusammensetzung A mindestens ein Copolymer C, das Monomere A-I umfasst, dass mit den funktionellen Gruppen B-I der eingebetteten Fasern B eine kovalente Bindungen eingehen. Der Anteil an Monomeren A-I in der thermoplastischen Polymerzusammensetzung A kann variabel sein. Je höher der Anteil an Monomeren A-I und der funktionellen Gruppen B-I ist, desto stärker wird regelmäßig auch die Bindung zwischen der thermoplastischen Polymerzusammensetzung A und den Fasern B sein, wobei es jedoch für jeden Fall ein Optimum gibt, bei dessen Überschreitung die Verbunde wieder spröder werden.

Gemäß einer bevorzugten Ausführungsform ist das Copolymer C aufgebaut mit einem Anteil an Monomeren A-I von mindestens 0,1 Gew.-%, bevorzugt von mindestens 0,5 Gew.-%, insbesondere von mindestens 1 Gew.-%.

Erfindungsgemäß kann die thermoplastische Polymerzusammensetzung A (Komponente A) neben einem Copolymer C optional weitere Bestandteile, wie ein oder mehrere weitere (Co)Polymere D, ein oder mehrere Farbstoffe F und/oder ein oder mehrere Hilfsstoffe H enthalten. Der Anteil an Copolymer C ist hierbei variabel. Bevorzugt besteht die thermoplastische Polymerzusammensetzung A jedoch hauptsächlich (daher zu mehr als 25% oder mehr als 50 % aus Copolymer C).

Bevorzugt besteht die thermoplastische Polymerzusammensetzung A zu mindestens 50 Gew.-%, bevorzugt zu mindestens 75 Gew.-%, insbesondere zu mindestens 90 Gew.-%, aus dem Copolymer C.

Gemäß einer besonders bevorzugten Ausführungsform besteht die thermoplastische Polymerzusammensetzung A zu mindestens 90 Gew.-%, bevorzugt zu mindestens 95 Gew.-%, insbesondere zu mindestens 98 Gew.-%, aus dem Copolymer C.

Als Monomere A-I, die mit den funktionellen Gruppen B-I der Fasern B kovalente Bindungen eingehen können, kommen alle Monomere, die derartige Eigenschaften aufweisen, in Frage. Bevorzugt sind dabei als Monomere A-I solche, die durch Reaktion mit Hydroxy- oder Aminogruppen kovalente Bindungen eingehen können. Bevorzugt, weisen die Monomere A-I auf:
(a) mindestens eine Funktionalität, die in der Lage ist mit den funktionellen Gruppen B-I der Oberfläche der Fasern B (etwa durch Reaktion mit Hydroxyl- und/oder Aminogruppen) kovalente Bindungen einzugehen; und
(b) mindestens eine zweite Funktionalität, die in der Lage ist in das Copolymer C eingebunden zu werden (beispielsweise eine (besonders bevorzugt endständige) Doppelbindung, die mittels radikalischer Polymerisation in das Copolymer C eingebunden wird).

Optional kann das Copolymer C oder auch ein anderes in der thermoplastischen Polymerzusammensetzung C enthaltenes (Co)polymer ein oder mehrere weitere Monomere enthalten, die in der Lage sind mit den Fasern B kovalente oder nicht-kovalente Bindungen einzugehen.

Gemäß einer bevorzugten Ausführungsform sind die Monomere A-I ausgewählt aus der Gruppe bestehend aus Maleinsäureanhydrid (MA), N-Phenylmaleimid (PM), tert.-Butyl(meth)acrylat und Glycidyl(meth)acrylat (GM), stärker bevorzugt ausgewählt aus der Gruppe bestehend aus Maleinsäureanhydrid (MA), N-Phenylmaleimid (PM) und Glycidyl(meth)acrylat (GM).

Das Copolymer C kann ein beliebiges Copolymer sein, das Monomere A-I und weitere Monomere A-II beinhaltet.

Gemäß einer bevorzugten Ausführungsform ist das Copolymer C ein Styrol-Copolymer C, das als Monomere A-II Styrol (S) enthält,

Besonders bevorzugt handelt es sich bei dem Copolymer C um ein Copolymer, das neben Monomeren A-I noch Styrol (S) als Monomere A-II und Acrylnitril (AN) als Monomere A-III enthält. Dann handelt es sich um ein Styrol-Acrylnitril-Copolymer (SAN-Copolymer). Ein weiteres besonders bevorzugtes Copolymer C ist Styrol-Maleinsäureanhydrid-Copolymer.

Alternativ kann es sich bei dem Copolymer C um ein Copolymer handeln, das neben Monomeren A-I noch alpha-Methylstyrol (AMS) (als Monomere A-II) und Acrylnitril (AN) (als Monomere A-III) enthält. Dann handelt es sich um ein alpha-Methylstyrol-Acrylnitril-Copolymer (AMSAN-Copolymer). Alternativ kann es sich bei dem Copolymer C um ein schlagzäh modifiziertes Styrol-Acrylnitril-Copolymer handeln, dass neben Styrol (S) (als Monomere A-II) und Acrylnitril (AN) (als Monomere A-III) noch Butadien als Monomere A-IV enthält. Dann handelt es sich um ein Acrylnitril-Butadien-Styrol-Copolymer (ABS-Copolymer). Alternativ kann es sich bei dem Copolymer C um ein schlagzäh modifiziertes Styrol-Acrylnitril-Copolymer handeln, dass neben alpha-Methylstyrol AMS (als Monomere A-II) und Acrylnitril (AN) (als Monomere A-III) noch Butadien als Monomere A-IV enthält. Dann handelt es sich um ein Acrylnitril-Butadien-Styrol-Copolymer (MABS-Copolymer). Alternativ kann es sich bei dem Copolymer C um ein schlagzäh modifiziertes Styrol-Acrylnitril-Copolymer handeln, dass neben Styrol (S) (als Monomere A-II) und Acrylnitril (AN) (als Monomere A-III) noch (Meth)Acrylester als Monomere A-IV enthält. Dann handelt es sich um ein Acrylester-Styrol-Acrylnitril-Copolymer (ASA-Copolymer). Die thermoplastische Polymerzusammensetzung A kann auch Block(co)polymere wie etwa Styrol-Butadien-Blockcopolymere (z.B. Styrolux, Styroflex, K-Resin, Clearen, Asaprene) enthalten oder gar (weitgehend) aus diesen bestehen. Dann kann auch das erfindungsgemäß einzusetzende Copolymer C ein solches Block(co)polymer sein. Weiterhin kann die thermoplastische Polymerzusammensetzung A optional Polycarbonate, amorphe Polyester und/oder amorphe Polyamide enthalten.

Bevorzugt besteht die thermoplastische Polymerzusammensetzung A zu mindestens 95 Gew.-% aus Copolymer C, insbesondere wobei Copolymer C ein Styrol-Copolymer ist.

Noch stärker besteht die thermoplastische Polymerzusammensetzung A zu mindestens 95 Gew.-% aus Copolymer C, das umfasst:
Maleinsäureanhydrid (MA) als Monomere A-I,
Styrol (S) als Monomere A-II, und
Acrylnitril (AN) als Monomere A-III.

Gemäß einer stark bevorzugten Ausführungsform umfasst die thermoplastische Polymerzusammensetzung A:
0,1-5 Gew-% Maleinsäureanhydrid (MA) als Monomere A-I,
50-99,9 Gew-% Styrol (S) als Monomere A-II, und
0-49,9 Gew-% Acrylnitril (AN) als Monomere A-III.

Besonders bevorzugt besteht das Styrol-Copolymer C aus:
0,1-5 Gew-% Maleinsäureanhydrid (MA) als Monomere A-I,
65-85 Gew-% Styrol (S) als Monomere A-II,
10-34,9 Gew-% Acrylnitril (AN) als Monomere A-III.

So kann das Styrol-Copolymer C etwa bestehen aus:
0,1-5 Gew-% Maleinsäureanhydrid (MA) als Monomere A-I,
70-80 Gew-% Styrol (S) als Monomere A-II,
15-29,9 Gew-% Acrylnitril (AN) als Monomere A-III.

Besonders bevorzugt besteht das Styrol-Copolymer C aus:
0,1-5 Gew-% Maleinsäureanhydrid (MA) als Monomere A-I,
70-80 Gew-% Styrol (S) als Monomere A-II,
15-29,9 Gew-% Acrylnitril (AN) als Monomere A-III.

Beispielhaft kann die die thermoplastische Polymerzusammensetzung A zu mindestens 95 Gew.-% aus Copolymer C bestehen, das besteht aus:
0,1-1 Gew-% Maleinsäureanhydrid (MA) als Monomere A-I,
74-74,9 Gew-% Styrol (S) als Monomere A-II,
25 Gew-% Acrylnitril (AN) als Monomere A-III.

### Komponente B (Fasern B)

Die Fasern können jegliche Fasern sein, deren Oberfläche funktionelle Gruppen B-I aufweist, die mit den Monomeren A-I, nicht aber mit Monomeren A-II, eine kovalente Bindungen eingehen.

Gemäß einer bevorzugten Ausführungsform sind die funktionellen Gruppen B-I an der Oberfläche der Faser B ausgewählt aus Silangruppen.

Gemäß einer weiteren bevorzugten Ausführungsform sind die funktionellen Gruppen B-I an der Oberfläche der Fasern B ausgewählt aus Hydroxy-, Ester- und Aminogruppen.

Besonders bevorzugt sind Hydroxy-Gruppen.

Gemäß einer stärker bevorzugten Ausführungsform sind die Fasern B Glasfasern, die Hydroxygruppen in Form von Silanolgruppen als funktionelle Gruppen B-I an der Oberfläche aufweisen.

Alternativ können die Fasern B auch Aramidfasern, Kohlenstoff-Fasern, Metallfasern, Basalt-Fasern und deren sämtliche Formen (z.B. als Garne, Zwirne, Rovings, Matten, Vliese, Gewebe, Gelege oder Gewirke) sein. Auch Mischungen zwischen zwei oder mehr unterschiedlichen Faserarten sind von der vorliegenden Erfindung umfasst. Werden zwei, drei oder mehr Gruppen von Fasern B mit unterschiedlichen Faser-Matrix-Haftungen verwendet, kann das Verhalten des Faserverbund-Werkstoffs weiter gezielt und individuell beeinflusst werden.

Die Fasern B können in beliebiger Orientierung und Anordnung in den Faserverbund-Werkstoff W eingebettet sein.

Bevorzugt liegen die Fasern B als Gewebe oder Gelege bzw. Endlosfasern (einschließlich Fasern die das Produkt einer Einzelfaserverdrillung sind) vor. Die Fasern B sind daher bevorzugt keine Kurzfasern ("chopped fibers") und der Faserverbund-Werkstoff W ist bevorzugt kein kurzglasfaserverstärkter Werkstoff. Mindestens 50 % der Fasern B weisen dabei bevorzugt eine Länge von mindestens 5 mm, stärker bevorzugt mindestens 10 mm oder mehr als 100 mm, auf. Die Länge der Fasern B hängt auch von der Größe des Formteils T ab, das aus dem Faserverbund-Werkstoff W hergestellt wird.

Gemäß einer bevorzugten Ausführungsform sind die Fasern B schichtweise in den Faserverbund-Werkstoff W eingebettet, bevorzugt als Gewebe oder Gelege, insbesondere als Gewebe, in den Faserverbund-Werkstoff W eingebettet.

Gewebe und Gelege sind hierbei nach allgemeiner Auffassung weitgehend austauschbar zu verstehen als (bevorzugt bidirektionale) Flächengebilde, bei denen die Fasern B in (bevorzugt zwei) unterschiedlichen Raumrichtungen (bevorzugt im 90°-Winkel ± 20% zueinander) angeordnet sind. Ein dadurch entstehendes Flächengebilde kann im Sinne der Erfindung auch als Matte bezeichnet werden.

Dem Fachmann ist bekannt, dass sich ein Gewebe oder Gelege von Kurzfasern unterscheidet, da bei ersteren zusammenhängende, größere Fasergebilde (Flächengebilde) entstehen, die in der Regel länger als 5 mm sein werden. Der Fachmann weiß, dass hierbei die Gewebe oder Gelege bevorzugt so vorliegen, dass sie den Faserverbund-Werkstoff W (weitgehend) durchziehen. Daher liegen die Gewebe oder Gelege bevorzugt so vor, dass sie das aus dem Faserverbund-Werkstoff W bestehende Formteil T (weitgehend) durchziehen. Weitgehend durchziehen bedeutet hierbei, dass die Gewebe oder Gelege bzw. Endlosfasern mehr als 50%, bevorzugt mindestens 70%, insbesondere mindestens 90%, der Länge des Formteils T durchziehen. Die Länge des Formteils T ist hierbei die größte Ausdehnung des Formteils T in einer der drei Raumrichtungen. Stärker bevorzugt durchziehen die Gewebe oder Gelege bzw. Endlosfasern mehr als 50%, bevorzugt mindestens 70%, insbesondere mindestens 90%, der Fläche des Formteils T. Die Fläche des Formteils T ist hierbei der Fläche der größten Ausdehnung des Formteils T in zwei der drei Raumrichtungen. Das Formteil T ist bevorzugt ein (weitgehend) flächiges Formteil T.

Das heißt, die Fasern B liegen in dem Faserverbund-Werkstoff W bevorzugt nicht (gänzlich) statistisch gleichverteilt vor, sondern in Ebenen mit höherem und solchen mit niedrigerem Anteil (daher als mehr oder weniger separate Lagen). Dann kann auch von einem laminatartigen oder laminaren Aufbau des Faserverbund-Werkstoffs W gesprochen werden. Die Fasern B können beliebig orientiert sein oder können etwa als Gewebe, Matten, Vliese, Gelege oder Gewirke vorliegen. Derartig gebildete flächige Laminate enthalten schichtweise aufgebauten Verbunde aus flächigen Verstärkungslagen (aus Fasern B) und Lagen der diese benetzenden und zusammenhaltenden Polymermatrix (aus thermoplastischer Polymerzusammensetzung A).

Dann lässt sich eine schichtenweise Einbettung besonders gut verwirklichen, da eine derartig ausgeprägte Schicht als Faserschicht in die thermoplastische Formmasse A eingebracht werden kann, wenn diese (weitgehend) geschmolzen ist. Bevorzugt sind die Fasern B als Gewebe oder Gelege, insbesondere als Gewebe, in den Faserverbund-Werkstoff W eingebettet.

### Komponente D (Polymer D)

Polymer D kann ein beliebiges (Co)Polymer darstellen, das sich von Polymerzusammensetzung A unterscheidet. Optional kann Polymer D auch quervernetzt sein. Daher ist Polymer D bevorzugt ein beliebiges (Co)Polymer, dass kein Monomer A-I enthält. Es wird verstanden werden, dass Polymer D ein Polymertyp sein kann, jedoch auch mehrere verschiedene Polymertypen umfassen kann. Bevorzugt ist Polymer D ein thermoplastisches Polymer. Bevorzugt ist Polymer D mit Polymerzusammensetzung A mischbar. Bevorzugt ist Polymer D mit den Fasern B kompatibel. Beispielhaft kann Polymer D ausgewählt sein aus der Gruppe bestehend aus Polystyrol, Poly(meth)acrylat, Polycarbonat, Styrol-Acrylnitril-Copolymer (SAN), Acrylnitril-Butadiene-Styrol-Copolymer (ABS), Acrylnitril-Styrol-Acrylat-Copolymer (ASA), Polylactid (PLA), Polylactid-co-Glycolid (PLGA), einem Polyester, Polyoxymethylen, Polyethylen, Polypropylen, Polyvinylchlorid (PVC), Polyethylenterephthalat (PET), Polybutylenterephthalat (PBT) und Polyamid.

### Faserverbund-Werkstoff W

Bevorzugt umfasst der Faserverbund-Werkstoff W:
(A) als Polymermatrix eine thermoplastische Polymerzusammensetzung A, die enthält:
   (A1) mindestens ein Copolymer C, das aufgebaut ist mit einem Anteil an Monomeren A-I von mindestens 0,1 Gew.-%, ferner Monomeren A-II und optional weiteren Monomeren, wobei die Monomere A-I ausgewählt sind aus der Gruppe bestehend aus Maleinsäureanhydrid (MA), N-Phenylmaleinimid (PM), tert.-Butyl(meth)acrylat und Glycidyl(meth)acrylat (GM);
   (A2)optional einen oder mehrere Farbstoffe F; und
   (A3)optional einen oder mehrere Hilfsstoffe H; und
(B) Fasern B, deren Oberfläche Hydroxy-, Ester- und/oder Aminogruppen als funktionelle Gruppen B-I aufweist, die mit den Monomeren A-I, nicht aber mit den Monomeren A-II, eine kovalente Bindung eingehen,
wobei die Lichtdurchlässigkeit des Faserverbund-Werkstoffs W um mindestens 10% höher ist als bei einem vergleichbaren Faserverbund-Werkstoff W, bei dem die Monomere A-I vollständig durch Monomere A-II ersetzt sind.

Zusätzlich oder statt der erhöhten Lichtdurchlässigkeit kann hierbei die Biegefestigkeit des Faserverbund-Werkstoffs W zudem um mindestens 20% höher sein als bei einem vergleichbaren Faserverbund-Werkstoff W, bei dem die Monomere A-I vollständig durch Monomere A-II ersetzt sind.

Stärker bevorzugt umfasst der Faserverbund-Werkstoff W:
(A) als Polymermatrix eine thermoplastische Polymerzusammensetzung A, die enthält:
   (A1) mindestens ein Copolymer C, das aufgebaut ist mit einem Anteil an Maleinsäureanhydrid (MA) von mindestens 0,1 Gew.-% als Monomeren A-I, ferner Monomeren A-II und optional weiteren Monomeren,
   (A2)optional einen oder mehrere Farbstoffe F; und
   (A3)optional einen oder mehrere Hilfsstoffe H; und
(B) Fasern B, deren Oberfläche Hydroxygruppen als funktionelle Gruppen B-I aufweist, die mit den Monomeren A-I, nicht aber mit den Monomeren A-II, eine kovalente Bindung eingehen,
wobei die Lichtdurchlässigkeit des Faserverbund-Werkstoffs W um mindestens 10% höher ist als bei einem vergleichbaren Faserverbund-Werkstoff W, bei dem die Monomere A-I vollständig durch Monomere A-II ersetzt sind.

Zusätzlich oder statt der erhöhten Lichtdurchlässigkeit kann hierbei die Biegefestigkeit des Faserverbund-Werkstoffs W zudem um mindestens 20% höher sein als bei einem vergleichbaren Faserverbund-Werkstoff W, bei dem die Monomere A-I vollständig durch Monomere A-II ersetzt sind.

Zusätzlich oder statt der erhöhten Lichtdurchlässigkeit und/oder erhöhten Biegefestigkeit kann eine geringere Oberflächenwelligkeit des Faserverbund-Werkstoffs W erreicht werden, etwa mit einer mittleren Wellentiefe auf der Oberfläche des Faserverbund-Werkstoffs W von unter 30 µm, bevorzugt unter 15 µm, stärker bevorzugt unter 10 µm, stärker bevorzugt unter 8 µm, insbesondere unter 7 µm.

Bevorzugt liegt die thermische Ausdehnung des Faserverbund-Werkstoffs W, die maßgeblich für die Wellenbildung an der Oberfläche des Faserverbund-Werkstoffs W verantwortlich ist, bei 0 bis 5 · 10⁻⁶/K.

Geringe Oberflächenwelligkeit wird insbesondere dann erreicht, wenn folgend Merkmale vorliegen:
(a) Verwendung einer der als Polymermatrix verwendeten amorphen thermoplastischen Polymerzusammensetzung A ((weitgehendes) Fehlen kristalliner Bestandteile) während der Konsolidierungsphase des Faserverbund-Werkstoffs W;
(b) hohe Fließfähigkeit der als Polymermatrix verwendeten Polymerzusammensetzung A; und
(c) hohe chemische Affinität der Monomeren A-I zur Verstärkungsfaser, insbesondere durch die Ausbildung von kovalenten Bindungen

Gemäß einer besonders bevorzugten Ausführungsform ist der Faserverbund-Werkstoff W derart, dass:
(A) die Polymermatrix A zu mindestens 75 Gew-% aus Styrol-Copolymer C besteht, das Maleinsäureanhydrid (MA) als Monomere A-I, Styrol (S) als Monomere A-II und bevorzugt Acrylnitril (AN) als Monomere A-III umfasst; und
(B) die Fasern B Glasfasern sind, die Hydroxygruppen in Form von Silanolgruppen als funktionelle Gruppen B-I an der Oberfläche aufweisen,
wobei die MA-Reste zumindest teilweise mit den Silanolgruppen an der Oberfläche der Fasern B verestert sind.

Bevorzugt sind hierbei mindestens 5 Mol.-%, stärker bevorzugt mindestens 10 Mol.-%, noch stärker bevorzugt mindestens 20 Mol.-%, noch stärker bevorzugt mindestens 30 Mol.-%, noch stärker bevorzugt mindestens 50 Mol.-%, noch stärker bevorzugt mindestens 70 Mol.-%, der MA-Reste mit den Silanolgruppen an der Oberfläche der Fasern B verestert.

Noch stärker bevorzugt ist der Faserverbund-Werkstoff W derart, dass:
(A) die thermoplastische Polymerzusammensetzung A zu mindestens 80 Gew-% (bevorzugt zu mindestens 95 oder mindestens 98 Gew.-%) aus Copolymer C besteht, wobei das Copolymer C besteht aus:
   0,1-1 Gew-% Maleinsäureanhydrid (MA) als Monomere A-I,
   74-74,9 Gew-% Styrol (S) als Monomere A-II,
   25 Gew-% Acrylnitril (AN) als Monomere A-III; und
(B) die Fasern B Glasfasern sind, die Hydroxygruppen in Form von Silanolgruppen als funktionelle Gruppen B-I an der Oberfläche aufweisen,
wobei die MA-Reste zumindest teilweise (bevorzugt zu mindestens 5 Mol-%, stärker bevorzugt zu mindestens 20 Mol.-%, insbesondere zu mindestens 50 Mol.-%) mit den Silanolgruppen an der Oberfläche der Fasern B verestert sind.

Noch stärker bevorzugt besteht der Faserverbund-Werkstoff W aus:
(A) 20-99,5 Gew.% einer thermoplastischen Polymerzusammensetzung A, die zu mindestens 80 Gew-% (bevorzugt zu mindestens 95 oder mindestens 98 Gew.-%) aus Copolymer C besteht, wobei das Copolymer C besteht aus:
   0,1-1 Gew-% Maleinsäureanhydrid (MA) als Monomere A-I,
   74-74,9 Gew-% Styrol (S) als Monomere A-II,
   25 Gew-% Acrylnitril (AN) als Monomere A-III; und
(B) 0,5-80 Gew.% an Fasern B, die Glasfasern sind, die Hydroxygruppen in Form von Silanolgruppen als funktionelle Gruppen B-I an der Oberfläche aufweisen,
wobei die MA-Reste zumindest teilweise (bevorzugt zu mindestens 5 Mol-%, stärker bevorzugt zu mindestens 20 Mol.-%, insbesondere zu mindestens 50 Mol.-%) mit den Silanolgruppen an der Oberfläche der Fasern B verestert sind.

Ganz besonders bevorzugt besteht der Faserverbund-Werkstoff W aus:
(A) 20-99,5 Gew.% einer thermoplastischen Polymerzusammensetzung A, die zu mindestens 95 Gew.-% aus Copolymer C besteht, wobei das Copolymer C besteht aus:
   0,1-1 Gew-% Maleinsäureanhydrid (MA) als Monomere A-I,
   74-74,9 Gew-% Styrol (S) als Monomere A-II,
   25 Gew-% Acrylnitril (AN) als Monomere A-III; und
(B) 0,5-80 Gew.% an Fasern B, die Glasfasern sind, die Hydroxygruppen in Form von Silanolgruppen als funktionelle Gruppen B-I an der Oberfläche aufweisen,
wobei die MA-Reste zu mindestens 20 Mol-% mit den Silanolgruppen an der Oberfläche der Fasern B verestert sind.

Die Lichtdurchlässigkeit ist, wie oben dargelegt, erfindungsgemäß in dem Faserverbund-Werkstoff W um mindestens 10 %, höher als bei einem vergleichbaren Faserverbund-Werkstoff W, bei dem Monomere A-I vollständig durch Monomere A-II ersetzt sind.

Gemäß einer bevorzugten Ausführungsform ist die Lichtdurchlässigkeit des Faserverbund-Werkstoffs W um mindestens 15%, bevorzugt um mindestens 20 %, insbesondere um mindestens 25 % höher als bei einem vergleichbaren Faserverbund-Werkstoff W, bei dem Monomere A-I vollständig durch Monomere A-II ersetzt sind.

Gemäß einer bevorzugten Ausführungsform ist die Biegefestigkeit des Faserverbund-Werkstoffs W um mindestens 20%, bevorzugt um mindestens 25%, stärker bevorzugt um mindestens 30 %, insbesondere um mindestens 50 %, höher als bei einem vergleichbaren Faserverbund-Werkstoff W, bei dem die Monomere A-I vollständig durch Monomere A-II ersetzt sind.

Gemäß einer stärker bevorzugten Ausführungsform ist
(a) die Lichtdurchlässigkeit des Faserverbund-Werkstoffs W um mindestens 15%, bevorzugt um mindestens 20 %, insbesondere um mindestens 25 % höher als bei einem vergleichbaren Faserverbund-Werkstoff W, bei dem Monomere A-I vollständig durch Monomere A-II ersetzt sind; und
(b) die Biegefestigkeit des Faserverbund-Werkstoffs W um mindestens 20%, bevorzugt um mindestens 25%, stärker bevorzugt um mindestens 30 %, insbesondere um mindestens 50 % höher als bei einem vergleichbaren Faserverbund-Werkstoff W, bei dem Monomere A-I vollständig durch Monomere A-II ersetzt sind.

Wie oben bereits dargelegt, erlaubt der erfindungsgemäße Faserverbund-Werkstoff W den Verzicht auf Haftvermittler. Da die Aufbringung derartiger Haftvermittler typischerweise einen zusätzlichen Arbeitsschritt verlangt, weist der Faserverbund-Werkstoff W bevorzugt keinen Haftvermittler auf.

Bevorzugt wurde bei der Herstellung des Faserverbund-Werkstoffs W kein Haftvermittler eingesetzt.

Gemäß einer bevorzugten Ausführungsform wurde bei der Herstellung des Faserverbund-Werkstoffs W kein Haftvermittler aus der Gruppe bestehend aus Aminosilanen und Epoxy-Verbindungen eingesetzt.

Somit enthält auch der hergestellte Faserverbund-Werkstoff W bevorzugt keinen Haftvermittler, insbesondere keinen Haftvermittler aus der Gruppe bestehend aus Aminosilanen und Epoxy-Verbindungen, oder chemische Reaktionsprodukte daraus. Gemäß einer stark bevorzugten Ausführungsform sind die Fasern B schichtweise in den Faserverbund-Werkstoff W eingebettet und wurde bei der Herstellung des Faserverbund-Werkstoffs W kein Haftvermittler eingesetzt.

Gemäß einer besonders bevorzugten Ausführungsform sind die Fasern B schichtweise als Gewebe oder Gelege, insbesondere als Gewebe, in den Faserverbund-Werkstoff W eingebettet und wurde bei der Herstellung des Faserverbund-Werkstoffs W kein Haftvermittler aus der Gruppe bestehend aus Aminosilanen und Epoxy-Verbindungen eingesetzt.

Alternativ kann jedoch der Faserverbund-Werkstoff W auch einen oder mehrere Haftvermittler enthalten, die es erlauben die Bindung zwischen Bestandteilen der thermoplastischen Polymerzusammensetzung A und Bestandteilen der Fasern B zu modifizieren (daher zu verstärken oder abzuschwächen). Beispielsweise können Gruppen von Fasern B jeweils mit verschiedenen Haftvermittler-Kompositionen versehen sein, welche die verschiedenen Faser-Matrix-Haftungen bewirken. Die unterschiedlichen Zusammensetzungen können sich ausschließlich in den Konzentrationen unterscheiden oder auch andere Zusammensetzungen aufweisen. Durch die unterschiedlichen Haftvermittler-Zusammensetzungen können verschiedene Faser-Matrix-Haftungen eingestellt werden. Bereits bei der Herstellung der Fasern B kann der Haftvermittler als Teil der Schlichte aufgebracht werden.

Es kann jedoch auch ein zusätzlicher Vorgang des thermischen Entschlichtens oder sonstiger Entschlichtung vorgesehen sein, der die bereits aufgebrachte Schlichte zerstört oder entfernt. Anschließend kann dann die Faser B mit einem Finish beschichtet werden, die den Haftvermittler enthält und auf die jeweilige Polymermatrix und die gewünschte Faser-Matrix-Haftung abgestimmt ist. Alternativ können auch Kunststoffschichten verwendet werden. Beispielsweise können bei dem erfindungsgemäßen Faserverbund-Werkstoff W Haftvermittler verwendet werden, die vernetzungsfähige Polyetherurethan- und Polyesterurethan-Polymere enthalten, welche als Filmbildner wirken, etwa zusammen mit einem Aminosilan-Haftvermittler.

Gemäß einer besonders bevorzugten Ausführungsform sind die Fasern B als Gewebe schichtweise in den Faserverbund-Werkstoff W eingebettet und bei der Herstellung des Faserverbund-Werkstoffs W wurde kein Haftvermittler aus der Gruppe bestehend aus Aminosilanen und Epoxy-Verbindungen, insbesondere gar kein Haftvermittler, eingesetzt.

Gemäß einer anderen besonders bevorzugten Ausführungsform sind die Fasern B als Gewebe schichtweise in den Faserverbund-Werkstoff W eingebettet und die thermoplastische Polymerzusammensetzung A umfasst (oder (weitgehend) besteht aus):
0,1-5 Gew-% Maleinsäureanhydrid (MA) als Monomere A-I,
70-80 Gew-% Styrol (S) als Monomere A-II, und
15-29,9 Gew-% Acrylnitril (AN) als Monomere A-III.

Gemäß einer noch stärker bevorzugten Ausführungsform sind die Fasern B als Gewebe schichtweise in den Faserverbund-Werkstoff W eingebettet und bei der Herstellung des Faserverbund-Werkstoffs W wurde kein Haftvermittler aus der Gruppe bestehend aus Aminosilanen und Epoxy-Verbindungen, insbesondere gar kein Haftvermittler, eingesetzt und die thermoplastische Polymerzusammensetzung A umfasst (oder (weitgehend) besteht aus):
0,1-5 Gew-% Maleinsäureanhydrid (MA) als Monomere A-I,
70-80 Gew-% Styrol (S) als Monomere A-II, und
15-29,9 Gew-% Acrylnitril (AN) als Monomere A-III.

Insbesondere liegen weitere Merkmale wie oben beschrieben vor. So sind die Fasern B auch in diesen besonders bevorzugten Ausführungsformen Glasfasern, die Hydroxygruppen in Form von Silanolgruppen als funktionelle Gruppen B-I) an der Oberfläche aufweisen.

Ganz besonders bevorzugt betrifft die vorliegende Erfindung daher (einen) Faserverbund-Werkstoff W, enthaltend (bestehend aus):
(A) 20-99.5 Gew.-% einer thermoplastischen Polymerzusammensetzung A, bestehend aus:
   (A1) mindestens einem Copolymer C bestehend aus
      0,1-5 Gew-% Maleinsäureanhydrid (MA) als Monomere A-I,
      70-80 Gew-% Styrol (S) als Monomere A-II, und
      15-29,9 Gew-% Acrylnitril (AN) als Monomere A-III;
   (A2) optional einem oder mehreren Farbstoffen F; und
   (A3) optional einem oder mehreren Hilfsstoffen H;
(B) 0,5-80 Gew.-% an Glasfasern als Fasern B, die Hydroxygruppen in Form von Silanolgruppen als funktionelle Gruppen B-I) an der Oberfläche aufweisen, die mit den Monomeren A-I, nicht aber mit den Monomeren A-II, eine kovalente Bindung eingehen; und
(C) 0-79,5 Gew.-% an Polymer D,
wobei die Fasern B als Gewebe schichtweise in den Faserverbund-Werkstoff W eingebettet sind und
wobei bevorzugt kein Haftvermittler aus der Gruppe bestehend aus Aminosilanen und Epoxy-Verbindungen, insbesondere gar kein Haftvermittler, eingesetzt wurde,
wobei die Lichtdurchlässigkeit des Faserverbund-Werkstoffs W um mindestens 10% höher ist als bei einem vergleichbaren Faserverbund-Werkstoff W, bei dem die Monomere A-I vollständig durch Monomere A-II ersetzt sind, und
wobei optional:
die Biegefestigkeit des Faserverbund-Werkstoffs W um mindestens 20% höher ist als bei einem vergleichbaren Faserverbund-Werkstoff W, bei dem die Monomere A-I vollständig durch Monomere A-II ersetzt sind, und/oder
wobei die Oberflächenwelligkeit des Faserverbund-Werkstoffs W mittlere Wellentiefen auf der Oberfläche des Faserverbund-Werkstoffs W von unter 30 µm, bevorzugt unter 15 µm, aufweist.

Herstellung eines Faserverbund-Werkstoffs W mit erhöhter Lichtdurchlässigkeit und/oder erhöhter Biegefestigkeit

Die vorliegende Erfindung umfasst auch ein Verfahren zur Herstellung eines Faserverbund-Werkstoffs W mit erhöhter Lichtdurchlässigkeit.

Die vorliegende Erfindung umfasst auch ein Verfahren zur Herstellung eines Faserverbund-Werkstoffs W mit erhöhter Biegefestigkeit. Insbesondere umfasst die vorliegende Erfindung auch ein Verfahren zur Herstellung eines Faserverbund-Werkstoffs W mit erhöhter Lichtdurchlässigkeit und erhöhter Biegefestigkeit.

Daher betrifft ein weiterer Aspekt der vorliegenden Erfindung ein Verfahren zur Herstellung eines Faserverbund-Werkstoffs W mit erhöhter Lichtdurchlässigkeit und/oder erhöhter Biegefestigkeit, umfassend die Schritte:
(i) Bereitstellen von:
   (A) einer thermoplastischen Polymerzusammensetzung A als Polymermatrix, die enthält:
      (A1) mindestens ein Copolymer C, das Monomere A-I und Monomere A-II und optional weitere Monomere umfasst;
      (A2) optional ein oder mehrere Farbstoffe F; und
      (A3) optional ein oder mehrere Hilfsstoffe H; und
   (B) Fasern B, deren Oberfläche funktionelle Gruppen B-I aufweist, die mit den Monomeren A-I, nicht aber mit den Monomeren A-II, eine kovalente Bindung eingehen können;
(ii) Schmelzen der thermoplastischen Polymerzusammensetzung A und Inkontaktbringen dieser mit den Fasern B aus Schritt (i); und
(iii) Reagieren der mindestens eines Teils der Monomere A-I des Copolymers C und mindestens eines Teils der funktionellen Gruppen B-I der Fasern B aus Schritt (ii) unter Ausbildung kovalenter Bindungen,
wobei die Lichtdurchlässigkeit des Faserverbund-Werkstoffs W um mindestens 15% höher ist als bei einem vergleichbaren Faserverbund-Werkstoff W, bei dem die Monomere A-I vollständig durch Monomere A-II ersetzt sind.

Das erfindungsgemäße Herstellungsverfahren kann die bei der Herstellung von Verbundwerkstoffen üblichen Phasen der Imprägnierung, Konsolidierung und Solidifikation umfassen, wobei der Prozess naturgemäß über die Wahl der Temperatur, des Drucks und der angewandten Zeiten beeinflusst werden kann.

Gemäß einer bevorzugten Ausführungsform ist hierbei der Faserverbund-Werkstoff W wie oben definiert. Daher gelten im Zusammenhang mit dem vorliegenden Verfahren die oben genannten Definitionen. Insbesondere die nachfolgend aufgeführten bevorzugten Ausführungsformen:
Die vorliegende Erfindung betrifft auch ein Verfahren zur Herstellung eines Faserverbund-Werkstoffs W mit glatter Oberflächen, umfassend die oben genannten Verfahrensschritte (i)-(iii).
Bevorzugt betrifft die vorliegende Erfindung ein Verfahren zur Herstellung eines Faserverbund-Werkstoffs W mit
   (a) erhöhter Lichtdurchlässigkeit und erhöhter Biegefestigkeit;
   (b) erhöhter Lichtdurchlässigkeit und geringerer Oberflächenwellung;
   (c) erhöhter Biegefestigkeit und geringerer Oberflächenwellung; oder
   (d) erhöhter Lichtdurchlässigkeit, erhöhter Biegefestigkeit und geringerer Oberflächenwellung,
wobei (a), (b), (c) oder (d) jeweils die die Verfahrensschritte (i)-(iii) wie oben beschrieben umfasst.

Der Schritt der Konsolidierung und Solidifikation, daher des Aushärtens der Polymermatrix aus der thermoplastischen Polymerzusammensetzung A ist bevorzugt so ausgestaltet, dass keine schnelle Erstarrung der Polymermatrix erfolgt. Vorteilhaft ist hierbei die Verwendung einer Polymermatrix aus einer amorphen thermoplastischen Polymerzusammensetzung A, da eine solche keine klare Schmelz- bzw. Erstarrungstemperatur aufweist.

Das Fehlen kristalliner Bestandteile reduziert die Volumenreduktion in der Abkühlphase und damit den wesentlichen Treiber für die sichtbare Oberflächenwelligkeit. Außerdem fällt durch die Verwendung amorpher Polymerzusammensetzungen A eine definierter Schmelz- bzw. Erstarrungstemperatur weg, die beim Abkühlen die Matrix schlagartig verfestigt und jegliche Ausgleichströmungen verhindert.

Zudem ist die Fließfähigkeit der amorphen thermoplastischen Polymerzusammensetzung A bevorzugt vergleichsweise hoch. Die erhöhte Fließfähigkeit infolge geringer Viskosität erlaubt der thermoplastischen Polymerzusammensetzung A der Polymermatrix noch lange während der Abkühlphase durch den von außen wirkenden Konsolidierungsdruck Schwindungsunterschieden entgegenzuwirken und sich bildende "Matrixlücken" in Oberflächennähe zu schließen.

Schritt (iii) beinhaltet bevorzugt die Ausbildung zahlreicher kovalenter Bindungen zwischen den Monomeren A-I und der Faser B.

Die hohe chemische Affinität zur Faser B begünstigt die Imprägnierung der Verstärkungsstruktur, d.h. eine vollständige, rasche und gleichmäßige Durchtränkung der Fasern B durch Polymerschmelze der thermoplastischen Polymerzusammensetzung A während eines Pressvorgangs. Auch diese besonders gleichmäßige Imprägnierung vermindert starke Schwankungen von Faser- und Matrixvolumenanteil entlang des Halbzeugs und begünstigt daher eine glatte, wellenarme Oberfläche.

Gemäß einer bevorzugten Ausführungsform besteht der Faserverbund-Werkstoff W aus:
20-99.5 Gew.-% an thermoplastischer Polymerzusammensetzung A;
0,5-80 Gew.-% an Fasern B; und
0-79,5 Gew.-% an Polymer D.

Beispielhaft besteht der Faserverbund-Werkstoff W aus:
20-99.5 Gew.-% an thermoplastischer Polymerzusammensetzung A;
0,5-80 Gew.-% an Fasern B.

Beispielhaft besteht der Faserverbund-Werkstoff W aus:
20-50 Gew.%, 30-60 Gew.-%, 40-60 Gew.-%, 40-50 Gew.-%, 50-60 Gew.-%, 50-99.5 Gew.-%, 75-90 Gew.-% oder 80-95 Gew.-% an thermoplastischer Polymerzusammensetzung A; und dem jeweils auf 100 Gew.-% an Gesamtmasse des Faserverbund-Werkstoffs W fehlenden Rest an Fasern B (und ggf. weiteren Komponenten, wie etwa Polymer D).

Gemäß einer bevorzugten Ausführungsform umfasst der Faserverbund-Werkstoff W 20-50 Vol.%, 30-60 Vol.-%, 40-60 Vol.-%, 40-50 Vol.-%, 50-60 Vol.-%, 50-99.5 Vol.-%, 75-90 Vol.-% oder 80-95 Vol.-% an thermoplastischer Polymerzusammensetzung A, bezogen auf das Gesamtvolumen an Faserverbund-Werkstoff W,
Gemäß einer bevorzugten Ausführungsform umfasst der Faserverbund-Werkstoff W 20-50 Vol.%, 30-60 Vol.-%, 40-60 Vol.-%, 40-50 Vol.-%, 50-60 Vol.-%, 50-99.5 Vol.-%, etwa 75-90 Vol.-% bzw. 80-95 Vol.-% an Fasern B, bezogen auf das Gesamtvolumen an Faserverbund-Werkstoff W,

Gemäß einer besonders bevorzugten Ausführungsform umfasst der Faserverbund-Werkstoff W (oder besteht aus):
40-70 Vol.-%, bevorzugt 50-60 Vol.-%, insbesondere 55-60 Vol.-%, an thermoplastischer Formmasse A (insbesondere Styrol-Acrylnitril-Maleinsäureanhydrid-Terpolymer, umfassend mindestens 0.1 Gew.-% an Maleinsäureanhydrid) und
30-60 Vol.-%, bevorzugt 40-50 Vol.-%, insbesondere 40-45 Vol.-% (Faser-VolumenAnteil) an Fasern B (insbesondere Glasfasern, ganz besonders eingebracht als Gewebe bzw. Gelege).

Gemäß einer bevorzugten Ausführungsform weist der Faserverbund-Werkstoff W im Querschnitt (daher an der Schnittkante, wenn ein flächiger Faserverbund-Werkstoff W (beispielsweise mit der Schere) zugeschnitten wird, im Durchschnitt, gemittelt über den gesamten Faserverbund-Werkstoff W) auf:
40-70 %, bevorzugt 50-60 %, insbesondere 55-60 %, an thermoplastischer Formmasse A (insbesondere Styrol-Acrylnitril-Maleinsäureanhydrid-Terpolymer, umfassend mindestens 0.1 Gew.-% an Maleinsäureanhydrid) und
30-60 %, bevorzugt 40-50 %, insbesondere 40-45 % (Faser-Dicken-Anteil) an Fasern B (insbesondere Glasfasern, ganz besonders eingebracht als Gewebe bzw. Gelege), wobei die %-Angaben hierbei dem prozentualen Dickenanteil (der Schnittkante) entsprechen.

Beispielhaft kann entlang einer Schnittkante eines 1,12 mm dicken Faserverbund-Werkstoffs W, die Dicke der Polymermatrix (daher der an thermoplastischer Formmasse A) 0,65 mm (entspricht 58 %) und der Fasern B 0,47 mm (entspricht 42%) betragen.

Gemäß einer bevorzugten Ausführungsform weist der Faserverbund-Werkstoff W eine Gesamtdichte von 0,5 bis 2.5 g/ml, stärker bevorzugt von 1 bis 2 g/ml, insbesondere von 1,5 bis 1,75 g/ml auf, etwa von 1,7 g/ml ± 10%.

Gemäß einer bevorzugten Ausführungsform ist das Copolymer C aufgebaut mit einem Anteil an Monomeren A-I von mindestens 0,1 Gew.-%, bevorzugt von mindestens 0,5 Gew.-%, insbesondere von mindestens 1 Gew.-%.

Gemäß einer bevorzugten Ausführungsform besteht die thermoplastische Polymerzusammensetzung A zu mindestens 90 Gew.-%, bevorzugt zu mindestens 95 Gew.-%, insbesondere zu mindestens 98 Gew.-%, aus dem Copolymer C.

Gemäß einer bevorzugten Ausführungsform sind die Monomere A-I ausgewählt aus der Gruppe bestehend aus Maleinsäureanhydrid (MA), N-Phenylmaleimid (PM), tert.-Butyl(meth)acrylat und Glycidyl(meth)acrylat (GM), etwa ausgewählt aus der Gruppe bestehend aus Maleinsäureanhydrid (MA), N-Phenylmaleimid (PM) und Glycidyl(meth)acrylat (GM).

Gemäß einer bevorzugten Ausführungsform ist das Copolymer C ein Styrol-Copolymer C, das als Monomere A-II Styrol (S) enthält.

Gemäß einer stark bevorzugten Ausführungsform umfasst die thermoplastische Polymerzusammensetzung A:
0,1-5 Gew-% Maleinsäureanhydrid (MA) als Monomere A-I,
50-99,9 Gew-% Styrol (S) als Monomere A-II, und
0-49,9 Gew-% Acrylnitril (AN) als Monomere A-III.

Besonders bevorzugt besteht das Styrol-Copolymer C aus:
0,1-5 Gew-% Maleinsäureanhydrid (MA) als Monomere A-I,
65-85 Gew-% Styrol (S) als Monomere A-II,
10-34,9 Gew-% Acrylnitril (AN) als Monomere A-III.

So kann das Styrol-Copolymer C etwa bestehen aus:
0,1-5 Gew-% Maleinsäureanhydrid (MA) als Monomere A-I,
70-80 Gew-% Styrol (S) als Monomere A-II,
15-29,9 Gew-% Acrylnitril (AN) als Monomere A-III.

Beispielhaft kann die die thermoplastische Polymerzusammensetzung A zu mindestens 95 Gew.-% aus Copolymer C bestehen, das besteht aus:
0,1-1 Gew-% Maleinsäureanhydrid (MA) als Monomere A-I,
74-74,9 Gew-% Styrol (S) als Monomere A-II,
25 Gew-% Acrylnitril (AN) als Monomere A-III.

Gemäß einer bevorzugten Ausführungsform sind die funktionellen Gruppen B-I an der Oberfläche der Fasern B ausgewählt sind aus Hydroxy-, Ester- und Aminogruppen.

Gemäß einer stärker bevorzugten Ausführungsform sind die Fasern B Glasfasern, die Hydroxygruppen in Form von Silanolgruppen als funktionelle Gruppen B-I an der Oberfläche aufweisen.

Gemäß einer bevorzugten Ausführungsform werden die Fasern B schichtweise in den Faserverbund-Werkstoff W eingebettet.

Es können auch mehrere Schichten, daher zwei oder mehr Schichten an Fasern B in den Faserverbund-Werkstoff W eingebettet sein, daher etwa zwei, drei, vier, fünf, sechs, sieben, acht, neun, zehn, 10-20, 15-25, 20-50 oder sogar noch mehr Schichten. Dann weist der Faserverbund-Werkstoff einen Laminat-artigen Aufbau auf.

Beispielhaft können die weiteren Schichten gleichartig oder auch andersartig aufgebaut sein als die erfindungsgemäßen, hierin beschriebenen.

Gemäß einer stärker bevorzugten Ausführungsform werden die Fasern B als Gewebe oder Gelege, insbesondere als Gewebe, in den Faserverbund-Werkstoff W eingebettet.

Gemäß einer besonders bevorzugten Ausführungsform ist der Faserverbund-Werkstoff W derart, dass:
(A) die Polymermatrix A zu mindestens 75 Gew-% aus Styrol-Copolymer C besteht, das Maleinsäureanhydrid (MA) als Monomere A-I, Styrol (S) als Monomere A-II und bevorzugt Acrylnitril (AN) als Monomere A-III umfasst; und
(B) die Fasern B Glasfasern sind, die Hydroxygruppen in Form von Silanolgruppen als funktionelle Gruppen B-I an der Oberfläche aufweisen,
wobei die MA-Reste zumindest teilweise mit den Silanolgruppen an der Oberfläche der Fasern B verestert sind.

Gemäß einer bevorzugten Ausführungsform ist die Lichtdurchlässigkeit des erhaltenen Faserverbund-Werkstoffs W um mindestens 20 %, insbesondere um mindestens 25 %, höher als bei einem vergleichbaren Faserverbund-Werkstoff W, bei dem Monomere A-I vollständig durch Monomere A-II ersetzt sind.

Gemäß einer bevorzugten Ausführungsform ist die Biegefestigkeit des Faserverbund-Werkstoffs W um mindestens 20%, bevorzugt um mindestens 25%, stärker bevorzugt um mindestens 30 %, insbesondere um mindestens 50 %, höher als bei einem vergleichbaren Faserverbund-Werkstoff W, bei dem die Monomere A-I vollständig durch Monomere A-II ersetzt sind.

Gemäß einer stärker bevorzugten Ausführungsform ist
(a) die Lichtdurchlässigkeit des Faserverbund-Werkstoffs W um mindestens 15%, bevorzugt um mindestens 20 %, insbesondere um mindestens 25 % höher als bei einem vergleichbaren Faserverbund-Werkstoff W, bei dem Monomere A-I vollständig durch Monomere A-II ersetzt sind; und
(b) die Biegefestigkeit des Faserverbund-Werkstoffs W um mindestens 20%, bevorzugt um mindestens 25%, stärker bevorzugt um mindestens 30 %, insbesondere um mindestens 50 % höher als bei einem vergleichbaren Faserverbund-Werkstoff W, bei dem Monomere A-I vollständig durch Monomere A-II ersetzt sind.

Gemäß einer bevorzugten Ausführungsform wird bei dem erfindungsgemäßen Verfahren kein Haftvermittler aus der Gruppe bestehend aus Aminosilanen und Epoxy-Verbindungen eingesetzt.

Schritt (ii) des erfindungsgemäßen Verfahrens, daher das Schmelzen der thermoplastischen Polymerzusammensetzung A und das Inkontaktbringen dieser Schmelze mit den Fasern B kann auch jede hierzu geeignete Weise erfolgen. Bei einer solchen Imprägnierung kann die Matrix in einen fließfähigen Zustand überführt werden und die Fasern B unter Ausbildung einer Grenzschicht benetzt werden.

Gemäß einer bevorzugten Ausführungsform werden bei der Durchführung des Verfahrens die Schritte (ii) und (iii) gleichzeitig durchgeführt.

Daher findet unmittelbar beim Inkontaktbringen der thermoplastischen Polymerzusammensetzung A mit den Fasern B eine chemische Reaktion statt, bei der die Monomere A-I mit der Oberfläche der Fasern B (in der Regel über eine Bindung an die funktionellen Gruppen B-I) eine kovalente Bindung ausbilden. Dies kann beispielhaft eine Veresterung sein (z.B. die Veresterung von Maleinsäureanhydrid-Monomeren mit Silanolgruppen einer Glasfaser). Alternativ kann die Ausbildung einer kovalenten Bindung auch in einem gesonderten Schritt initiiert werden (z.B. durch Temperaturerhöhung, Radikalstarter und/oder Photo-Initiation) Dies kann bei jeder geeigneten Temperatur durchgeführt werden.

Gemäß einer bevorzugten Ausführungsform wird/werden die Schritte (ii) und/oder (iii) bei einer Temperatur von mindestens 200°C, bevorzugt mindestens 250°C, stärker bevorzugt mindestens 300°C, noch stärker bevorzugt bei 300 bis 400°C, insbesondere bei 300°C-340°C durchgeführt.

Bevorzugt werden hierbei etwa Temperaturen im Bereich von 50°C bis 400°C, stärker bevorzugt 50°C bis 360°C, noch stärker bevorzugt 50°C bis 350°C, noch stärker bevorzugt 75°C bis 350°C, noch stärker bevorzugt 100°C bis 350°C, noch stärker bevorzugt 150°C bis 350°C, noch stärker bevorzugt 200°C bis 350°C, noch stärker bevorzugt 250°C bis 350°C, noch stärker bevorzugt 300°C bis 350°C, insbesondere 300°C bis 340°C, verwendet.

Hierbei ist bevorzugt darauf zu achten, dass möglichst keine Pyrolyse auftritt und die verwendeten Komponenten thermisch nicht oder nur wenig (zu <50 %) zersetzt werden, mit Ausnahme von Zusammensetzung, die durch thermische Abspaltung reaktive Gruppen freisetzen, wie z.B. bei tert.-Butyl(meth)acrylat. Hierbei wird durch thermische Elimination bei Temperaturen von etwa ab 200 °C Isobuten freigesetzt, und die verbleibende funktionelle Gruppe (im Wesentlichen eine Säurefunktion) kann dann mit der Faseroberfläche reagieren.

Gemäß einer bevorzugten Ausführungsform beträgt daher bei der Durchführung der Schritte (ii) und/oder (iii) die Verweildauer bei Temperaturen von ≥ 200°C nicht mehr als 10 min, bevorzugt nicht mehr als 5 min, stärker bevorzugt nicht mehr als 2 min, insbesondere nicht mehr als 1 min.

Das Verfahren, insbesondere die Schritte (ii) und/oder (iii), kann/können grundsätzlich bei beliebigem Druck durchgeführt werden (bevorzugt atmosphärischer Druck oder Überdruck), mit und ohne Anpressen der Komponenten. Bei einem Anpressen können jedoch die Eigenschaften des Faserverbund-Werkstoff W verbessert werden.

Gemäß einer bevorzugten Ausführungsform werden daher die Schritte (ii) und/oder (iii) bei einem Pressdruck von 5-100 bar (beispielhaft bei 5-50 bar) und einer Presszeit von 10-60 s, bevorzugt bei einem Pressdruck von 10-30 bar und einer Presszeit von 15-40 s, durchgeführt.

Bevorzugt umfasst das erfindungsgemäße Verfahren zur Herstellung eines Faserverbund-Werkstoffs W mit erhöhter Lichtdurchlässigkeit und/oder erhöhter Biegefestigkeit die Schritte:
(i) Bereitstellen von:
   (A) einer thermoplastischen Polymerzusammensetzung A, die zu mindestens 75 Gew-% aus Styrol-Copolymer C besteht, wobei das Styrol-Copolymer Maleinsäureanhydrid (MA) als Monomere A-I, Styrol (S) als Monomere A-II und bevorzugt Acrylnitril (AN) als Monomere A-III umfasst; und
   (B) Fasern B, die Glasfasern sind, die Hydroxygruppen in Form von Silanolgruppen als funktionelle Gruppen B-I an der Oberfläche aufweisen,
(ii) Schmelzen der thermoplastischen Polymerzusammensetzung A und Inkontaktbringen dieser mit den Fasern B aus Schritt (i);
(iii) Reagieren von mindestens 20 Mol-% der Monomere A-I des Copolymers C und mindestens eines Teils der funktionellen Gruppen B-I der Fasern B aus Schritt (ii) unter Ausbildung kovalenter Bindungen; und optional
(iv) dreidimensionale Formgebung zu einem Formteil T.

Stärker bevorzugt umfasst das erfindungsgemäße Verfahren zur Herstellung eines Faserverbund-Werkstoffs W mit erhöhter Lichtdurchlässigkeit und/oder erhöhter Biegefestigkeit die Schritte:
(i) Bereitstellen von:
   (A) einer thermoplastischen Polymerzusammensetzung A, die zu mindestens 75 Gew-% aus Styrol-Copolymer C besteht, wobei das Styrol-Copolymer Maleinsäureanhydrid (MA) als Monomere A-I, Styrol (S) als Monomere A-II und bevorzugt Acrylnitril (AN) als Monomere A-III umfasst; und
   (B) Fasern B, die Glasfasern sind, die Hydroxygruppen in Form von Silanolgruppen als funktionelle Gruppen B-I an der Oberfläche aufweisen,
(ii) Schmelzen der thermoplastischen Polymerzusammensetzung A und Inkontaktbringen dieser mit den Fasern B aus Schritt (i) bei einer Temperatur von mindestens 200°C;
(iii) Reagieren von mindestens 20 Mol-% der Monomere A-I des Copolymers C und mindestens eines Teils der funktionellen Gruppen B-I der Fasern B aus Schritt (ii) unter Ausbildung kovalenter Bindungen bei mindestens 200°C; und optional
(iv) dreidimensionale Formgebung zu einem Formteil T,
wobei bevorzugt bei der Durchführung der Schritte (ii) und/oder (iii) die Verweildauer bei Temperaturen von ≥ 200°C nicht mehr als 5 min beträgt.

Besonders bevorzugt umfasst das erfindungsgemäße Verfahren zur Herstellung eines Faserverbund-Werkstoffs W mit erhöhter Lichtdurchlässigkeit und/oder erhöhter Biegefestigkeit die Schritte:
(i) Bereitstellen von:
   (A) einer thermoplastischen Polymerzusammensetzung A, die besteht aus Styrol-Copolymer C bestehend aus:
      0,1-5 Gew-% Maleinsäureanhydrid (MA) als Monomere A-I,
      50-90 Gew-% Styrol (S) als Monomere A-II,
      5-49,9 Gew-% Acrylnitril (AN) als Monomere A-III; und
   (B) Fasern B, die Glasfasern sind, die Hydroxygruppen in Form von Silanolgruppen als funktionelle Gruppen B-I an der Oberfläche aufweisen,
(ii) Schmelzen der thermoplastischen Polymerzusammensetzung A und Inkontaktbringen dieser mit den Fasern B aus Schritt (i) bei einer Temperatur von 300-340°C;
(iii) Reagieren von mindestens 20 Mol-% der Monomere A-I des Copolymers C und mindestens eines Teils der funktionellen Gruppen B-I der Fasern B aus Schritt (ii) unter Ausbildung kovalenter Bindungen bei einer Temperatur von 300-340°C; und optional
(iv) dreidimensionale Formgebung zu einem Formteil T,
wobei bei der Durchführung der Schritte (ii) und/oder (iii) die Verweildauer bei Temperaturen von ≥ 200°C nicht mehr als 5 min beträgt.

Bei der Konsolidierung werden Lufteinschlüsse in dem Faserverbund-Werkstoff W vermindert und eine gute Verbindung zwischen thermoplastischen Polymerzusammensetzung A und Fasern B (insbesondere, wenn es sich um schichtenweise eingebettete Fasern B handelt) hergestellt. Bevorzugt ist es, nach Imprägnierung und Konsolidierung einen (möglichst weitgehend) porenfreien Materialverbund zu erhalten.

Optional können die Fasern B schichtweise als Lagen von Fasern B in einem einzigen Verarbeitungsschritt mit der Polymermatrix aus thermoplastischer Polymerzusammensetzung A imprägniert und konsolidiert werden. Die Herstellung des Faserverbund-Werkstoffs W kann auf diese Weise in besonders effizienter Art erfolgen.

Alternativ können die genannten Schritte in getrennter Abfolge ausgeführt werden. Beispielsweise können zunächst Lagen aus Fasern B mit unterschiedlich vorbereiteten Fasern B vorbereitet werden, wobei eine Imprägnierung der Fasern B mit der Polymermatrix aus thermoplastischer Polymerzusammensetzung A stattfindet. Danach können imprägnierte Lagen mit Fasern B mit unterschiedlicher Faser-Matrix Haftung vorliegen, die in einem weiteren Arbeitsschritt zu einem Materialverbund als Faserverbund-Werkstoff W konsolidiert werden können.

Bevor die Lagen aus Fasern B mit der Polymermatrix aus thermoplastischer Polymerzusammensetzung A laminiert werden, kann wenigstens ein Teil der Fasern B einer Vorbehandlung unterzogen werden, in deren Verlauf die spätere Faser-Matrix-Haftung beeinflusst wird. Die Vorbehandlung kann beispielsweise einen Beschichtungsschritt, einen Ätzschritt, einen Wärmebehandlungsschritt oder einen mechanischen Oberflächenbehandlungsschritt enthalten. Insbesondere kann beispielsweise durch Erhitzen eines Teils der Fasern B ein bereits aufgebrachter Haftvermittler teilweise entfernt werden.

Die Verstärkungslagen können beim Herstellungsprozess (Laminieren) vollständig miteinander verbunden werden. Derartige Faserverbund-Werkstoff-Matten bieten optimierte Festigkeit und Steifigkeit in der Faser-Richtung und können besonders vorteilhaft weiterverarbeitet werden.

Dass Verfahren kann auch die Herstellung eines Formteils T umfassen.

Gemäß einer bevorzugten Ausführungsform umfasst das Verfahren als weiteren Schritt (iv) eine dreidimensionale Formgebung zu einem Formteil T.

Dies kann auf beliebige Art erfolgen, etwa durch mechanische Formgebung durch einen Formgebungskörper, der auch eine Walze mit Prägung sein kann. Bevorzugt wird der noch formbare Faserverbund-Werkstoff W, bei dem die thermoplastische Polymerzusammensetzung A noch (teilweise) geschmolzen vorliegt geformt. Alternativ oder zusätzlich kann auch ein ausgehärteter Faserverbund-Werkstoff W kaltgeformt werden.

Bevorzugt wird am Ende des Verfahrens ein (weitgehend) festes Formteil T erhalten.

Bevorzugt umfasst daher das Verfahren als weiteren Schritt (v) das Aushärten des aus einem der Schritte (iii) oder (iv) erhaltenen Produkts.

Dieser Schritt kann auch als Solidifikation bezeichnet werden. Die in der Regel unter Wärmeentzug stattfindende Solidifikation kann anschließend zu einem gebrauchsfertigen Formteil T führen. Optional kann das Formteil T noch nachbearbeitet werden (z.B. entgratet, poliert, gefärbt usw.).

Das Verfahren kann kontinuierlich, semikontinuierlich oder diskontinuierlich erfolgen.

Gemäß einer bevorzugten Ausführungsform wird das Verfahren als kontinuierliches Verfahren durchgeführt, insbesondere als kontinuierliches Verfahren zu Herstellung von glatten oder dreidimensional geprägten Folien.

So kann eine dreidimensional geprägte Folie etwa durch Walzenprägung entstehen. Hierzu kann eine auf einer Rolle befindliche Folie abgerollt und über eine Walze geleitet werden, deren Oberfläche die gewünschte Struktur wiedergibt. Auch kann eine auf einer Rolle befindliche Folie durch zwei aufeinander laufende Walzen, deren Oberfläche die gewünschte Struktur wiedergibt, geleitet werden. Letztlich kann die Folie auf eine zweite Rolle aufgerollt und so gelagert werden.

Alternativ können auch Formteile T etwa für Kraftfahrzeuge oder Werkzeuge semi- oder diskontinuierlich hergestellt werden.

Auch können derartige Formteile T als (oder als Bestandteile von) Fenster(n), Verscheibungen, Waschmaschinenfenster(n), Lichtschächte(n), Linsenabdeckungen, Lichtverteilerplatten, Gehäuse(n) für Leuchtkörper, Lichtleiter usw. verwendet werden.

Wie oben dargelegt, ist ein wesentliches Element der Erfindung die Verwendung von Monomeren A-I in Kombination mit funktionellen Gruppen B-I der Fasern B.

Im Lichte des oben genannten wird hierin auch die Verwendung von Monomeren A-I in einem Copolymer C zur Herstellung eines Faserverbund-Werkstoffs W mit erhöhter Lichtdurchlässigkeit und/oder erhöhter Biegefestigkeit enthaltend das Copolymer C und lichtdurchlässige Fasern B gelehrt, wobei die Fasern B derart in das Copolymer C eingebettet werden, dass eine kovalente Bindung zwischen mindestens einem Teil der funktionellen Gruppen B-I und mindestens einem Teil der Monomere A-I entsteht, wobei der Faserverbund-Werkstoff W wie oben definiert ist und/oder die Verwendung gemäß einem wie oben definierten Verfahren erfolgt.

Das Produkt des oben beschriebenen Verfahrens ist ebenfalls von der vorliegenden Erfindung umfasst.

Das Produkt kann in seiner Gesamtheit transparent, teilweise transparent oder intransparent sein. Das Produkt kann optional aus dem Faserverbund-Werkstoff W bestehen. Es kann optional ein-, zwei- oder mehrseitig beschichtet sein (z-B- mit einem Metall, einem Lack, einem (Co)polymer usw.). So kann das Produkt etwa mit etwa mit Styrol-Acrylnitril-Copolymer (SAN), Styrol-Acrylnitril-Maleinsäureanhydrid-Terpolymer (SAN-MA, auch S/AN/MA oder S/AN/Maleinsäureanhydrid), ABS oder ASA beschichtet sein. Die Oberfläche des Produkts kann glänzend oder mattiert sein. Beispielhaft kann der Faserverbund-Werkstoff W auch auf eine Metalloberfläche (z.B. eine Metallfolie) aufgebracht und/oder Metall-beschichtet werden, wobei die Folie oder Beschichtung (zumindest teilweise) optisch sichtbar bleiben soll (z.B. eine Gold- oder Aluminium-Beschichtung bzw. -Folie). Ein Produkt kann beispielhaft ein Formteil (z.B. ein Formteil für ein Fahrzeug oder ein Haushaltsgerät) oder eine Folie sein.

Ein weiterer Aspekt der vorliegenden Erfindung betrifft demnach einen Faserverbund-Werkstoff W erhältlich nach einem wie oben definierten Verfahren.Dieser hat bevorzugt die oben genannten Eigenschaften. Bevorzugt ist hierbei demnach der Faserverbund-Werkstoff W wie oben definiert.

Die Figuren, die experimentellen Beispiele und die Ansprüche dienen der näheren IIlustration der Erfindung.

### Figuren

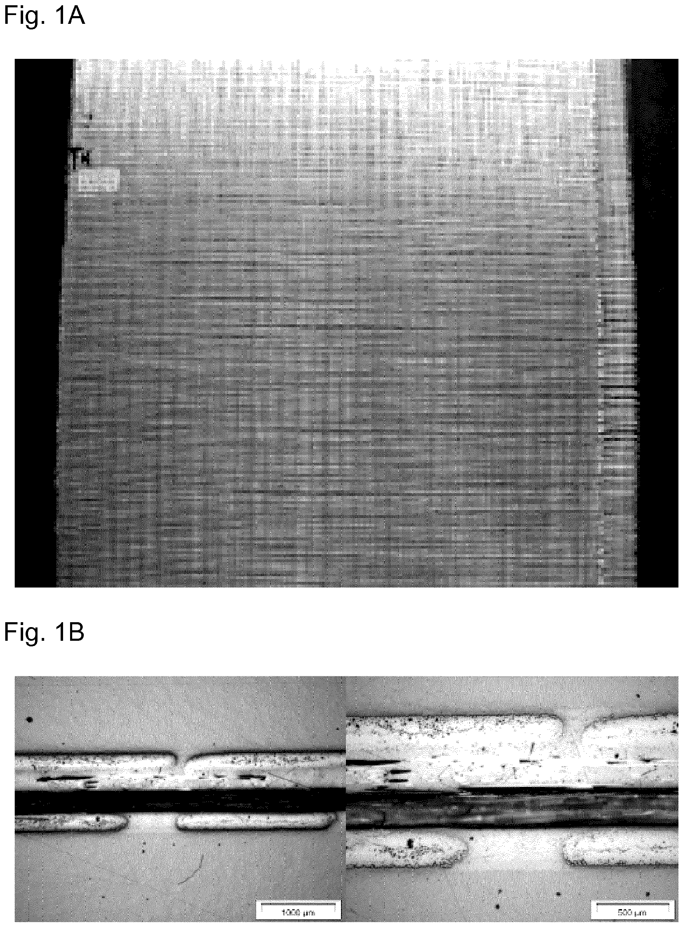

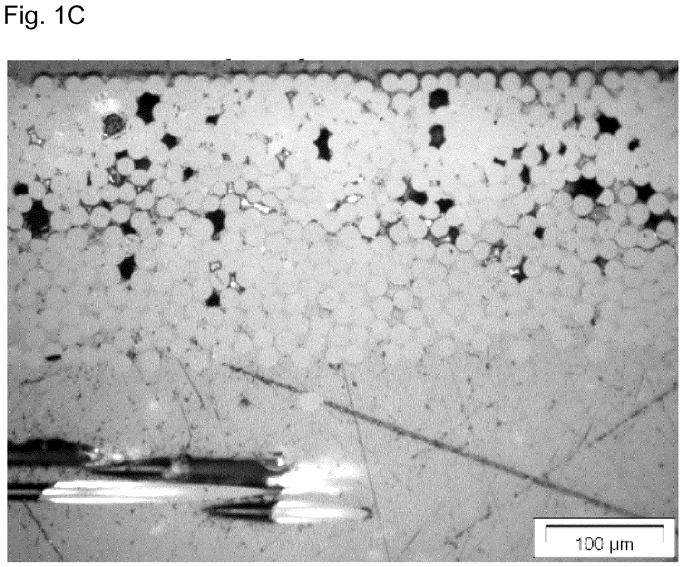

Figur 1 zeigt die Faserverbund-Werkstoffe W, die nach Versuchs-Nr. 1 erhalten wurden. Figur 1A stellt die visuelle Dokumentation dar. Figur 1B zeigt die mikroskopische Ansicht eines Schnitts durch den in horizontaler Orientierung angeordneten laminaren Faserverbund-Werkstoff W (links: 25-fache Vergrößerung, rechts: 50-fache Vergrößerung), wobei die Fasern deutlich als horizontal verlaufende dunkle Schicht zwischen den hellen Schichten aus thermoplastischer Formmasse erkennbar sind. Figur 1C zeigt die 200-fache Vergrößerung, wobei erkennbar wird, dass die Imprägnierung an einigen Stellen nicht abgeschlossen ist.

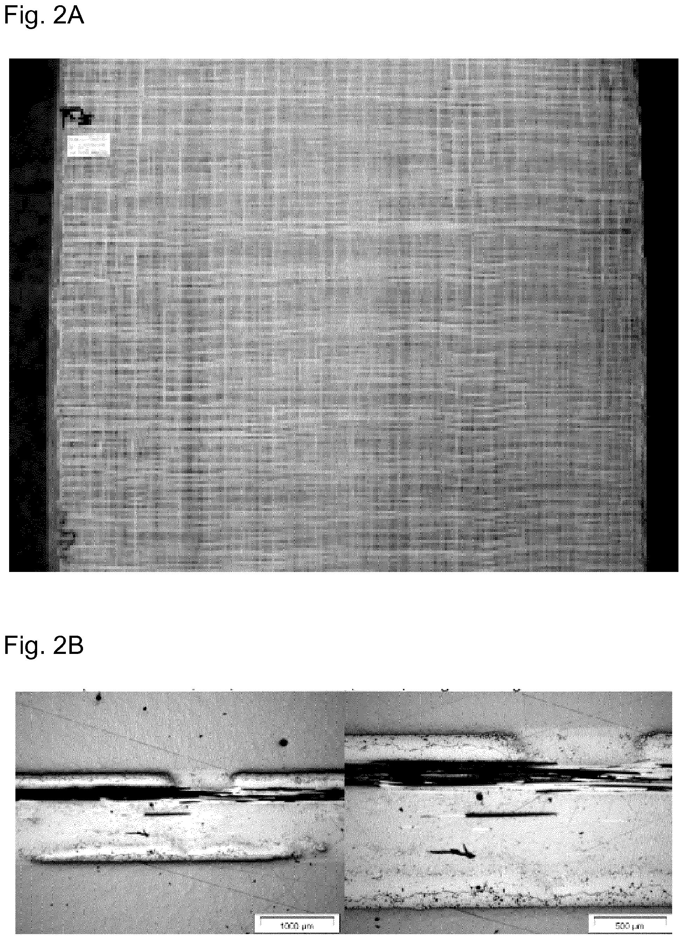

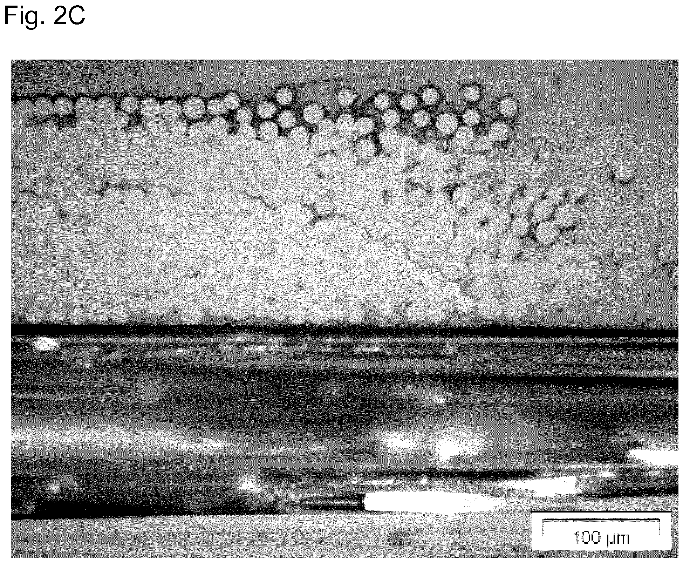

Figur 2 zeigt die Faserverbund-Werkstoffe W, die nach Versuchs-Nr. 2 erhalten wurden. Figur 2A stellt die visuelle Dokumentation dar. Figur 2B zeigt die mikroskopische Ansicht eines Schnitts durch den in horizontaler Orientierung angeordneten laminaren Faserverbund-Werkstoff W (links: 25-fache Vergrößerung, rechts: 50-fache Vergrößerung), wobei die Fasern deutlich als verlaufende dunkle Schicht zwischen den hellen Schichten aus thermoplastischer Formmasse erkennbar sind. Figur 2C zeigt die 200-fache Vergrößerung, wobei erkennbar wird, dass die Imprägnierung teilweise nicht abgeschlossen ist.

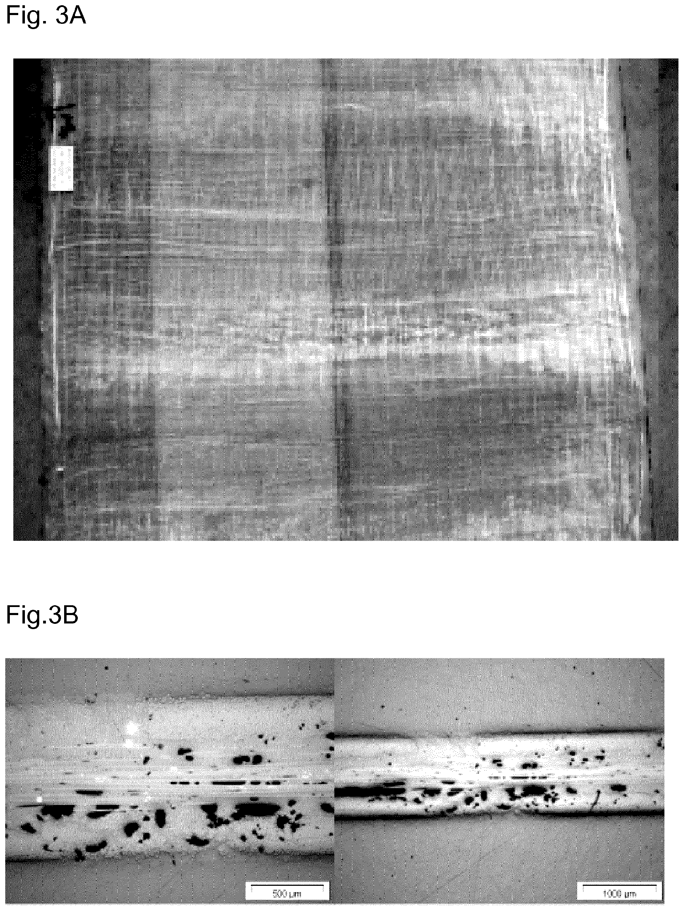

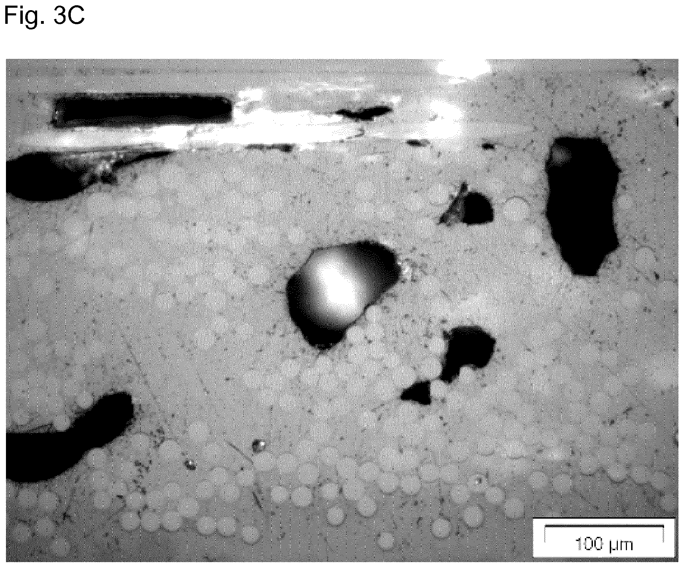

Figur 3 zeigt die Faserverbund-Werkstoffe W, die nach Versuchs-Nr. 3 erhalten wurden. Figur 3A stellt die visuelle Dokumentation dar. Figur 3B zeigt die mikroskopische Ansicht eines Schnitts durch den in horizontaler Orientierung angeordneten laminaren Faserverbund-Werkstoff W (links: 25-fache Vergrößerung, rechts: 50-fache Vergrößerung), wobei keine Schicht aus Fasern erkennbar ist. Figur 3C zeigt die 200-fache Vergrößerung, wobei erkennbar wird, dass die Imprägnierung weitgehend abgeschlossen ist.

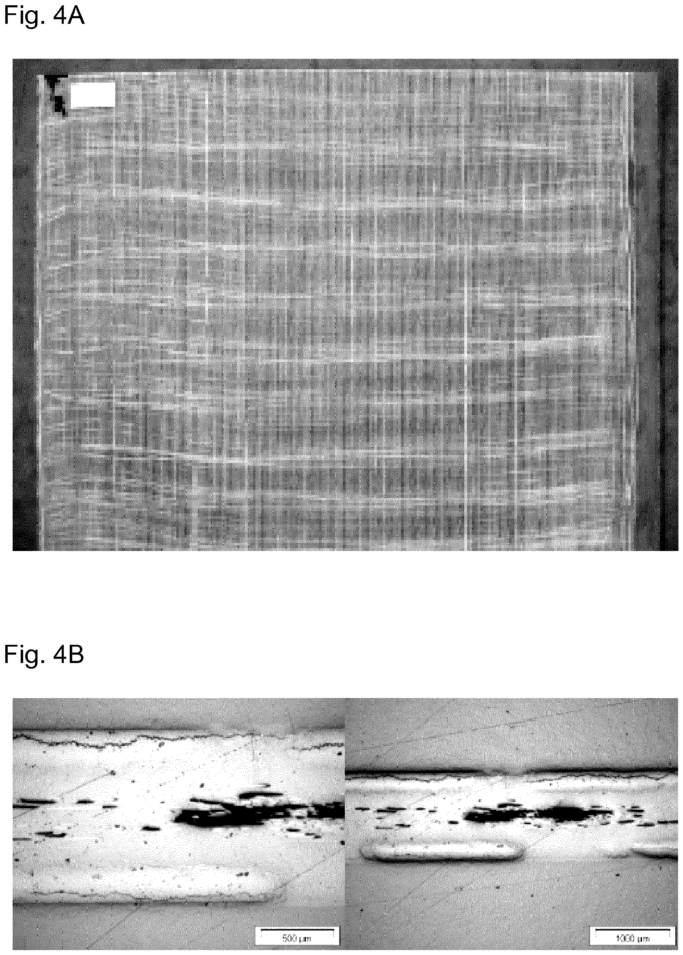

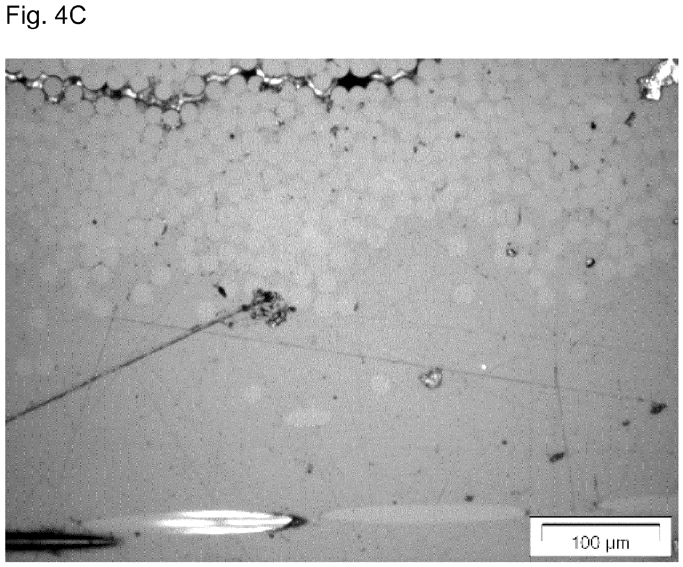

Figur 4 zeigt die Faserverbund-Werkstoffe W, die nach Versuchs-Nr. 4 erhalten wurden. Figur 4A stellt die visuelle Dokumentation dar. Figur 4B zeigt die mikroskopische Ansicht eines Schnitts durch den in horizontaler Orientierung angeordneten laminaren Faserverbund-Werkstoff W (links: 25-fache Vergrößerung, rechts: 50-fache Vergrößerung), wobei keine Schicht aus Fasern erkennbar ist. Figur 4C zeigt die 200-fache Vergrößerung, wobei erkennbar wird, dass die Imprägnierung an einzelnen Stellen nicht vollständig abgeschlossen ist.

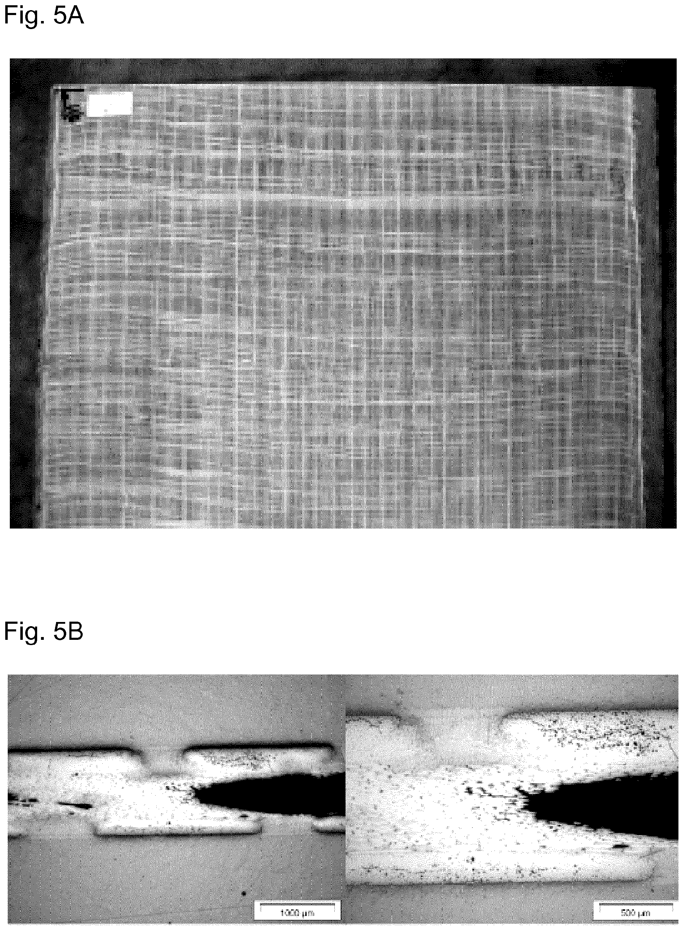

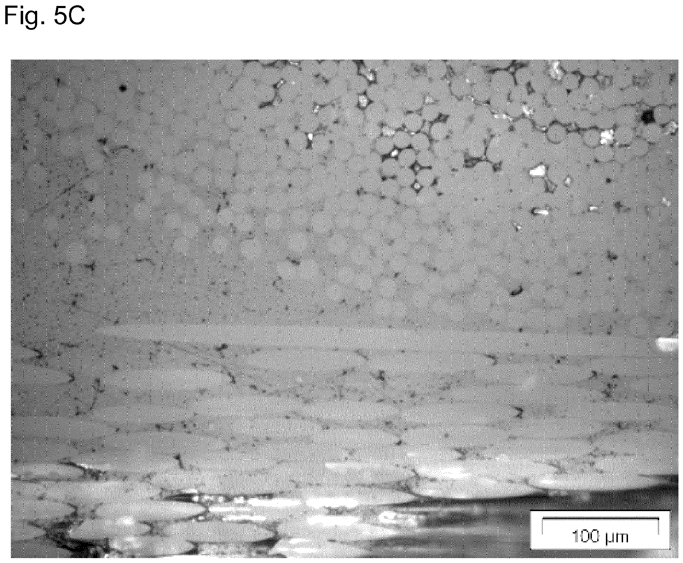

Figur 5 zeigt die Faserverbund-Werkstoffe W, die nach Versuchs-Nr. 5 erhalten wurden. Figur 5A stellt die visuelle Dokumentation dar. Figur 5B zeigt die mikroskopische Ansicht eines Schnitts durch den in horizontaler Orientierung angeordneten laminaren Faserverbund-Werkstoff W (links: 25-fache Vergrößerung, rechts: 50-fache Vergrößerung), wobei keine Schicht aus Fasern erkennbar ist. Figur 4C zeigt die 200-fache Vergrößerung, wobei erkennbar wird, dass die Imprägnierung an wenigen Stellen nicht vollständig abgeschlossen ist.

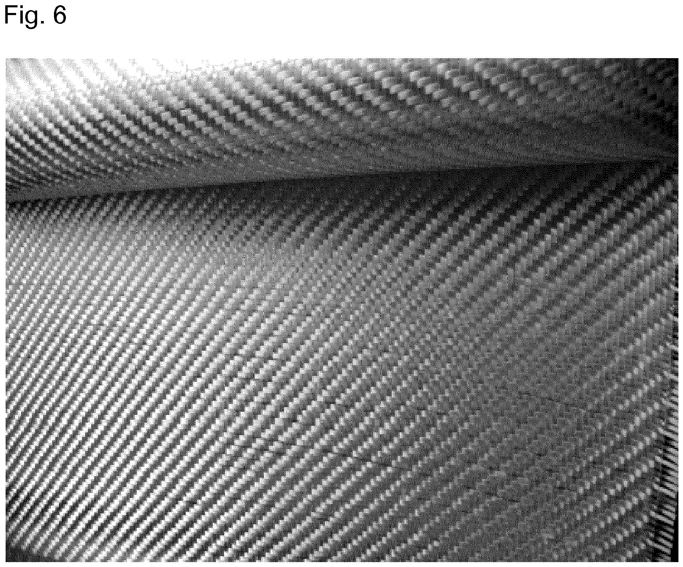

Figur 6 zeigt die Herstellung der Faserverbund-Werkstoffe W (hier: Glasfaser-Gewebe) im Presseneinlauf V25-V28. Deutlich erkennbar ist, dass ein derartiges Herstellungsverfahren eine kontinuierliche Produktion erlaubt. Zudem ist durch die Einprägung des Musters erkennbar, dass der Faserverbund-Werkstoff W auch dreidimensional formbar ist.

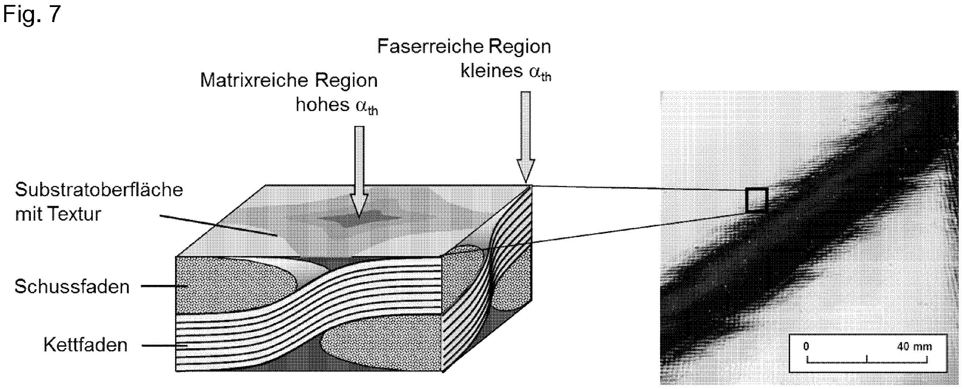

Figur 7 zeigt schematisch die Entstehung von unerwünschter Bildung von Oberflächenwellen (Textur).

### Beispiele

### Verfahrensparameter:

Versuche wurden auf einer Intervall-Heißpresse, welche in der Lage ist einen Faser/Folienverbund aus Polymerfolie, Schmelze oder Pulver herzustellen, zur quasikontinuierlichen Herstellung von faserverstärkten thermoplastischen Halbzeugen, Laminaten und Sandwichplatten durchgeführt.

Plattenbreite: 660 mm
Laminat-Dicke: 0,2 bis 9,0 mm
Laminat-Toleranzen: max. ± 0,1 mm entsprechend Halbzeug
Sandwichplattenstärke: max. 30 mm
Ausstoß: ca. 0,1 - 60 m/h, abhängig von Qualität und Bauteildicke
Nennvorschub 5 m/h
Werkzeugdruck: Presseinheit 5-25 bar, für minimale und maximale Werkzeuggröße
stufenlos regelbar (optional)
Werkzeugtemperierung: 3 Heiz- und 2 Kühlzonen
Werkzeugtemperatur: bis 400 °C
Werkzeuglänge: 1000 mm
Öffnungsweg Presse: 0,5 bis 200 mm
Produktionsrichtung: rechts nach links

### Technische Daten der Schmelze-Plastifizierung:

Diskontinuierlicher Schmelze-Auftrag in Mittellage zur Herstellung von faserverstärkten thermoplastischen Halbzeugen
Schneckendurchmesser: 35 mm
Max. Hubvolumen: 192 cm³
Max. Schneckendrehzahl: 350 U/min
Max. Austragsstrom: 108 cm³/s
Max. Austragsdruck: 2406 bar spezifisch
Transparenz wurde an 1 mm Organoblech-Proben in % von weißem Tageslicht (100 %) gemessen (Transparenzmessgeräts Byk Haze gard i (BYK-gardner, USA) gemäß ASTM D 1003 (etwa ASTM D 1003-13)).

### Gefahrene Thermoplast Kombinationen A:

| | |
|---|---|
| A1 (Vergleich): | S/AN mit 75 % Styrol (S) und 25 % Acrylnitril (AN), Viskositätszahl 60, Mw von 250.000 g/mol (gemessen via Gel Permeations Chromatographie an Standard Säulen mit monodispersen Polystyrol Eichstandards) |
| A2: | S/AN/Maleinsäureanhydrid Copolymer mit der Zusammensetzung (Gew%): 74/25/1, Mw von 250.000 g/mol (gemessen via Gel Permeations Chromatographie an Standard Säulen mit monodispersen Polystyrol Eichstandards) |
| A3: | Mischung aus A2 : A1 = 2 : 1 |
| A4: | Mischung aus A2 : A1 = 1 : 2 |

### Verwendete Faser-Textilien B:

| | |
|---|---|
| B1: | Bidirektionales Glasfasergelege 0/90° (GF-GE) mit Flächengewicht = 590g/m², Schuss + Kette = 1200tex [beispielsweise KN G 590.1 von P-D Glasseiden GmbH] |
| B2: | Glasfasergewebe Köper 2/2 (GF-KG) mit Flächengewicht = 576 g/m², Schuss, + Kette = 1200tex |

Die im Zusammenhang mit Versuchen Nr. 1-5 gefahrenen Kombinationen und Parametereinstellungen sind in nachfolgender Tabelle aufgeführt:

**Tabelle 1. Herstellungsbedingungen der Faserverbund-Werkstoffe W**

| Versuchs-Nr. | Composite* | Temperatur-Profil | Pressdruck (bar) | Presszeit (s) | Dicke (mm) |
|---|---|---|---|---|---|
| 1 (Vgl.) | A1+B1 | 220-240-260-160-80 | 20 | 20 | 1 |
| 2 (Vgl.) | A1+B1 | 220-280-300-160-80 | 25 | 30 | 1 |
| 3 | A2+B1 | 240-300-320-160-80 | 20 | 20 | 1 |
| 4 | A3+B1 | 240-300-320-160-80 | 20 | 30 | 1 |
| 5 | A4+B1 | 240-300-320-160-80 | 20 | 30 | 1 |

| | | | | | |
|---|---|---|---|---|---|
| *Komponenten A + B1: 0.465 mm Dicke Textilaufbau, 0.653 mm Dicke Matrixaufbau, Gesamtvolumen Matrix: 22 ml, Faser-Volumenanteil: 41.6 %, Gesamtdichte Halbzeug: 1.669 g/ml, Gesamtdicke Halbzeug: 1.117 mm | | | | | |

### Versuchs-Nr. 1 (Vergleichsversuch)

Die Ergebnisse sind in Figur 1 gezeigt.

*Visuelle Bewertung an der Halbzeug-Oberfläche:*
Makroimprägnierung: abgeschlossen
Mikroimprägnierung: deutlich nicht abgeschlossen

*Mikroskopische Bewertung im Halbzeug-Inneren:*
Matrixschicht in Mittellage: deutlich erkennbar
Matrixschicht in Decklage: am Roving nicht erkennbar
Imprägnierung Kettfäden: mittig unimprägnierte Bereiche, umlaufend leicht imprägniert Imprägnierung Schussfäden: mittig deutlich unimprägnierte Bereiche, umlaufend
leicht imprägniert
Lufteinschlüsse: wenig, nur im Roving
Konsolidierung: ungenügend, Beschädigung Kett- und Schussfäden

### Versuchs-Nr. 2

Die Ergebnisse sind in Figur 2 gezeigt.

*Visuelle Bewertung an der Halbzeug-Oberfläche:*
Makroimprägnierung: abgeschlossen
Mikroimprägnierung: an mehreren Stellen nicht abgeschlossen

*Mikroskopische Bewertung im Halbzeug-Inneren:*
Matrixschicht in Mittellage: erkennbar
Matrixschicht in Decklage: wenig am Roving erkennbar
Imprägnierung Kettfäden: mittig unimprägnierte Bereiche erkennbar, umlaufend teilweise imprägniert, teilweise unimprägniert
Imprägnierung Schussfäden: mittig unimprägnierte Bereiche, umlaufend leicht imprägniert
Lufteinschlüsse: wenig
Konsolidierung: nicht ausreichend, deutliche Beschädigung Schussfäden

### Versuchs-Nr. 3

Die Ergebnisse sind in Figur 3 gezeigt.

*Visuelle Bewertung an der Halbzeug-Oberfläche:*
Makroimprägnierung: abgeschlossen
Mikroimprägnierung: abgeschlossen
*Versuch Nr. 3, Mikroskopische Bewertung im Halbzeug-Inneren:*
Matrixschicht in Mittellage: nicht erkennbar
Matrixschicht in Decklage: gut erkennbar
Imprägnierung Kettfäden: kaum unimprägnierte Bereiche erkennbar, umlaufend gut imprägniert
Imprägnierung Schussfäden: kaum unimprägnierte Bereiche erkennbar, umlaufend gut imprägniert
Lufteinschlüsse: sehr viele, große Blasen erkennbar
Konsolidierung: gut, keine Beschädigungen

### Versuchs-Nr. 4

Die Ergebnisse sind in Figur 4 gezeigt.

*Visuelle Bewertung an der Halbzeug-Oberfläche:*
Makroimprägnierung: abgeschlossen
Mikroimprägnierung: überwiegend abgeschlossen

*Mikroskopische Bewertung im Halbzeug-Inneren:*
Matrixschicht in Mittellage: kaum erkennbar
Matrixschicht in Decklage: erkennbar
Imprägnierung Kettfäden: leicht unimprägnierte Bereiche erkennbar, umlaufend gut imprägniert
Imprägnierung Schussfäden: unimprägnierte Bereiche erkennbar, aber umlaufend imprägniert
Lufteinschlüsse: keine erkennbar
Konsolidierung: befriedigend, mittlere Beschädigungen von Schussfäden erkennbar

### Versuchs-Nr. 5

Die Ergebnisse sind in Figur 5 gezeigt.

*Visuelle Bewertung an der Halbzeug-Oberfläche:*
Makroimprägnierung: abgeschlossen
Mikroimprägnierung: überwiegend abgeschlossen

*Mikroskopische Bewertung im Halbzeug-Inneren:*
Matrixschicht in Mittellage: nicht erkennbar
Matrixschicht in Decklage: erkennbar
Imprägnierung Kettfäden: wenig unimprägnierte Bereiche erkennbar, umlaufend gut imprägniert
Imprägnierung Schussfäden: wenig unimprägnierte Bereiche erkennbar, umlaufend gut imprägniert
Lufteinschlüsse: keine erkennbar
Konsolidierung: teilweise gut, teilweise ungenügend, lokale Beschädigungen von Schussfäden erkennbar

### Zusammenfassung der Versuchsergebnisse

**Tabelle 2. Zusammenfassung Versuche und Bewertung**

| Versuchs-Nr. | Composite* | Maleinsäureanhydrid-Konzentration (Gew %) | Max. Temperatur (°C) | Imprägnation** | | Transparenz (%) | Konsolidierung ** |
|---|---|---|---|---|---|---|---|
| | | | | Macro | Micro | | |
| 1 (Vgl.) | A1+B1 | 0 | 260 | 1 | 5 | 1 | 5 |
| 2 (Vgl.) | A1+B1 | 0 | 300 | 1 | 4 | 3 | 4 |
| 3 | A2+B1 | 1 | 320 | 1 | 1 | 40 | 2 |
| 4 | A3+B1 | 0,66 | 320 | 1 | 2 | 25 | 3 |
| 5 | A4+B1 | 0,33 | 320 | 1 | 2 | 20 | 4 |

| | | | | | | | |
|---|---|---|---|---|---|---|---|
| *Komponenten A + B1: 0.465 mm Dicke Textilaufbau, 0.653 mm Dicke Matrixaufbau, Gesamtvolumen Matrix: 22 ml, Faser-Volumenanteil: 41.6 %, Gesamtdichte Halbzeug: 1.669 g/ml, Gesamtdicke Halbzeug: 1.117 mm **1= perfekt, 2= gut, 3=teilweise, 4= wenig, 5=schlecht/keine | | | | | | | |

**Tabelle 3. Optischer und haptischer Vergleich der erfindungsgemäßen Versuchseinstellungen mit herkömmlichen Organoblechen**

| Versuchs-Nr. | Composite | Maleinsäureanhydrid-Konzentration (Gew %) | Oberflächengüte* | Bedruckbarkeit mit 45 mdyne Tinte** | Transparenz (%) |
|---|---|---|---|---|---|
| 1 (Vgl) | A1+B1 | 0 | 2 | 1 | 1 |
| 2 (Vgl.) | A1+B1 | 0 | 2 | 1 | 3 |
| 3 | A2+B1 | 1 | 1-2 | 1 | 40 |
| 4 | A3+B1 | 0,66 | 1-2 | 1 | 25 |
| 5 | A4+B1 | 0,33 | 1-2 | 1 | 20 |
| 6 | Bond Laminates Composite aus ca 60 % Glasfaser-Gewebe und 40 % Polyamid | 0 | 4-5 | 1 | 0 |
| 7 | Composite aus ca. 60 % Glasfaser-Gewebe und 40 % Polypropylen | 0 | 4-5 | 5 | 0 |

| | | | | | |
|---|---|---|---|---|---|
| *1= vollständig glatt, 2= weitgehend glatt, 3= leicht rau, 4= mäßig rau, 5= Fasern sind deutlich zu spüren **1= perfekt, 2= gut, 3=teilweise, 4= wenig, 5=schlecht/keine | | | | | |

### Versuchs-Nr. 6

Die Ergebnisse sind in Tabelle 5 gezeigt. Die im Zusammenhang mit Versuch Nr. 6 gefahrenen Kombinationen und Parametereinstellungen sind in nachfolgender Tabelle aufgeführt:

**Tabelle 4. Herstellungsbedingungen der Faserverbund-Werkstoffe W**

| Versuchs-Nr. | Composite* | Temperatur-Profil | Pressdruck (bar) | Presszeit (s) | Dicke (mm) |
|---|---|---|---|---|---|
| 4 | A1+B1 | 220-240-300-160-80 | 20 | 20 | 1 |
| 12 | A3+B1 | 220-240-300-160-80 | 20 | 20 | 1 |
| 28 | A1+B2 | 240-300-320-160-80 | 20 | 20 | 1 |
| 26 | A3+B2 | 240-300-320-160-80 | 20 | 30 | 1 |

*Komponenten A + B1: 0.465 mm Dicke Textilaufbau, 0.653 mm Dicke Matrixaufbau, Gesamtvolumen Matrix: 22 ml, Faser-Volumenanteil: 41.6 %, Gesamtdichte Halbzeug: 1.669 g/ml, Gesamtdicke Halbzeug: 1.117 mm

**Tabelle 5. Vergleich der Biegefestigkeit.**

| Versuchs-Nr. | 8 | 9 | Delta (%) | 10 | 11 | Delta (%) |
|---|---|---|---|---|---|---|
| Verstärkung | Gelege (B1), Kettrichtung | | | Gewebe Köper 2/2 (B2) | | |
| Matrix | A1 | A3 | | A1 | A3 | |
| Biegeprüfung: | | | | | | |
| Modul (GPa) | 19,7 | 22,5 | 14 | 21,1 | 19,6 | -7 |
| Bruchspannung (MPa) | 211 | 462 | 119 | 423 | 528 | 25 |

Tabelle 5 zeigt die in einer Versuchsreihe erhaltenen Faserverbund-Werkstoffe W. Es wurden jeweils reines SAN (A1) sowie ein S/AN/Maleinsäureanhydrid Copolymer (A2) mit einer handelsüblichen Gelege- und Gewebeverstärkung in einem identischen Prozess kombiniert und geprüft. Der Faservolumengehalt der Verbunde betrug 42%. Die verbesserte Qualität der Imprägnierung und Verbindung zwischen Faser und Matrix zeigt sich nicht an der Biegesteifigkeit, aber deutlich an der Biegefestigkeit (Bruchspannung) der untersuchten Proben.

### Versuchs-Nr. 7

Die Ergebnisse sind in Tabelle 6 gezeigt.

**Tabelle 6. Vergleich der Wellentiefe Wt.**

| Versuchs-Nr. | 12 | 13 | 14 |
|---|---|---|---|
| Verstärkung | Faser (B3) | | |
| Matrix (A4) | SAN | PC OD | PA6 |
| Mittelwert Wellentiefe MW Wt (µm) | 5.2 | 11.7 | 12.3 |
| Maximalwert Wellentiefe Max Wt (µm)) | 7.8 | 22.3 | 17.2 |

Hierbei sind die Komponenten wie folgt definiert:

| | |
|---|---|
| SAN: | SAN-MA-Terpolymer, Gewichtszusammensetzung (Gew.-%): 73/25/2, Mw: 250.000 g/mol (gemessen via Gelpermeations-Chromatographie an Standard-säulen mit monodispersen Polystyrol-Standards), MVR: 15-25 cm³/10 min bei 220°C/10kg (ISO1133), Viskositätszahl (in DMF) J = 61-67 ml/g |
| PC OD: | leichtfließendes, amorphes Polycarbonat optischer Grade für optische Discs) |
| PA6: | teilkristallines, leichtfließendes Polyamid 6 |
| Fasern (B3): | Glasfasergewebe Köper 2/2 (GF-KG) mit Flächengewicht = 300 g/m², Schuss, + Kette = 320tex |

Wie aus Tabelle 6 ersichtlich ist, ist die Verwendung von SAN-MA-Terpolymer besonders vorteilhaft bezüglich des Erhalts einer geringen Wellentiefe der Oberfläche. PC OD zeigte sich als spannungsrissempfindlich.

### Beispiele für Mehrschicht-Organobleche

Die beschriebenen Faserverbund-Werkstoffe (Organobleche), insbesondere mit amorpher, thermoplastischer Matrix eignen sich besonders für die Herstellung von transparenten und transluzenten Formkörper, Folien und Beschichtungen. Einige Beispiele sind nachfolgend aufgezeigt. Wenn nicht anders erwähnt werden die Formteile in Spritzgussverfahren hergestellt.

### Beispiel 1: Herstellung des Faserverbund-Werkstoffs M

40 Gew.-%, bezogen auf den Faserverbund-Werkstoff, eines Acrylnitril-Styrol-Maleinsäureanhydrid-Copolymers als thermoplastische Formmasse A (hergestellt aus: 75 Gew.-% Styrol, 24 Gew.-% Acrylnitril und 1 Gew.-% Maleinsäureanhydrid) wird mit 60 Gew.-%, bezogen auf den Faserverbund-Werkstoff, einer Glas-basierten Verstärkungsfaser mit chemisch reaktiver Funktionalität (Silangruppen) an der Oberfläche [GW 123-580K2 von P-D Glasseiden GmbH] compoundiert.

### Beispiel 2: Herstellung des Faserverbund-Werkstoffs N

65 Gew.-%, bezogen auf den Faserverbund-Werkstoff, eines Acrylnitril-Butadien-Styrol-Copolymer als thermoplastische Formmasse A (ABS hergestellt aus: 45 Gew.-% Butadien, 30 Gew.-% Styrol, 24 Gew.-% Acrylnitril und 1Gew.-% Maleinsäureanhydrid) wird mit 35 Gew.-%, bezogen auf den Faserverbund-Werkstoff, einer Glas-basierten Verstärkungsfaser mit chemisch reaktiver Funktionalität (Silangruppen) an der Oberfläche [GW 123-580K2 von P-D Glasseiden GmbH] compoundiert. Der Faserverbund-Werkstoff wird im Anschluss verrippt.
Beispiel 3: Herstellung von Formteilen aus den Faserverbund-Werkstoffen M und N
Beispiel A: Waschmaschinenfenster
Beispiel B: Linsenabdeckungen

Es wird eine erhöhte Steifigkeit des Fensters und der Linsenabdeckung gegenüber entsprechenden aus Glas bestehenden Materialien beobachtet. Ferner sind die Organobleche weniger empfindlich gegenüber Kratzern und Druck.

### Weitere Versuche zur Biegespannung an mit Flächengebilden verstärkten FaserVerbund-Wirkstoffen

Die Komponenten sind wie oben definiert. Die Biegespannung und das Biegemodul wurden nach DIN 14125:2011-05 bestimmt. Die Kombinationen und Parametereinstellungen zu dem in Anspruch 1 beschriebenen Verfahren sind in nachfolgender Tabelle aufgeführt:

**Tabelle 7. Zusammensetzungen Vgl. 1, Vgl. 2, Vgl. 10 und Vgl. 15 sowie der erfindungsgemäßen Zusammensetzungen V3 bis V9 und V11 bis V14. X: Gewichtsverhältnis Komponente A : B = 60 : 40**

| Nr. | A1 | A2 | A3 | A4 | B1 | B2 | T [°C] | t [s] |
|---|---|---|---|---|---|---|---|---|
| Vgl. 1 | X | | | | X | | 260 | 20-30 |
| Vgl. 2 | X | | | | X | | 300 | 30-30 |
| V3 | | X | | | X | | 280 | 20-30 |
| V4 | | X | | | X | | 280 | 40 |
| V5 | | X | | | X | | 320 | 30-30 |
| V6 | | | X | | X | | 300 | 20-30 |
| V7 | | | X | | X | | 320 | 20-30 |
| V8 | | | | X | X | | 310 | 20-30 |
| V9 | | | | X | X | | 320 | 20-30 |
| Vgl. 10 | X | | | | X | | 320 | 20-30 |
| V11 | | X | | | X | | 320 | 20-30 |
| V12 | | X | | | | X | 320 | 20-30 |
| V13 | | | X | | | X | 320 | 20-30 |
| V14 | | | | X | | X | 320 | 20-30 |
| Vgl. 15 | X | | | | | X | 320 | 20-30 |

In Tabelle 7 werden die Bedingungen der durchgeführten Versuche dargestellt. Hierbei wurden die Edukte, sowie die Temperatur und die Presszeit variiert. Der Pressdruck betrug in allen Versuchsreihen ca. 20 bar.

**Tabelle 8: Mittelwerte der maximalen Biegespannung der Kett- und Schussrichtung der hergestellten Organobleche gemäß den Mischungen Vgl. 2, V5, V7, V9, Vgl. 10, V12 bis V14 und Vgl. 15, wobei die Herstellungstemperatur je mindestens 300 °C betrug.**

| Nr. | Faserrichtung | Mittelwerte der maximale Biegespannung [MPa] |
|---|---|---|
| Vgl. 2 | Kettrichtung | 211,23 |
| | Schussrichtung | 184,94 |
| V5 | Kettrichtung | 670,48 |
| | Schussrichtung | 271,05 |
| V7 | Kettrichtung | 590,98 |
| | Schussrichtung | 301,21 |
| V9 | Kettrichtung | 371,73 |
| | Schussrichtung | 244,62 |
| Vgl. 10 | Kettrichtung | 319,8 |
| | Schussrichtung | 236,01 |
| V12 | Kettrichtung | 556,15 |
| | Schussrichtung | 484,24 |
| V13 | Kettrichtung | 528,96 |
| | Schussrichtung | 386,83 |
| V14 | Kettrichtung | 513,95 |
| | Schussrichtung | 413,86 |
| Vgl. 15 | Kettrichtung | 423,03 |
| | Schussrichtung | 301,40 |

Die in Tabelle 8 dargestellten Werte sind das Mittel von je neun Messungen. Tabelle 8 zeigt, dass die erfindungsgemäßen Organobleche V5, V7, V9, V12, V13 und V14 eine höhere mittlere maximale Biegespannung aufweisen als die Organobleche, welche eine Matrix enthaltend 75 Gew.-% Styrol (S) und 25 Gew.-% Acrylnitril (AN), aufweist (Vgl. 10 und Vgl. 15). Auch der Vergleich von V9 mit Vgl. 10 zeigt, dass unter den gleichen Bedingungen (T=320 °C und t=30 s) das erfindungsgemäße Organoblech eine größere Biegespannung sowohl in der Kett- als auch in der Schussrichtung aufweist.

Es zeigt sich, dass durch das Verfahren zur Herstellung des Faserverbund-Werkstoffs mit einer thermoplastischen Formmasse A, Verstärkungsfasern B verbesserte Produkte erhalten werden können.

### Weitere Untersuchung von Mehrschichtigen Faserverbund-Werkstoffen

### Technische Daten der Intervall-Heißpresse (IVHP):

Quasi-kontinuierliche Herstellung von faserverstärkten thermoplastischen Halbzeugen, Laminaten
und Sandwichplatten
Plattenbreite: 660 mm
Laminat-Dicke: 0,2 bis 9,0 mm
Laminat-Toleranzen: max. ± 0,1 mm entsprechend Halbzeug
Sandwichplattenstärke: max. 30 mm
Ausstoß: ca. 0,1 - 60 m/h, abhängig von Qualität und Bauteildicke
Nennvorschub 5 m/h
Werkzeugdruck: Presseinheit 5-25 bar, für minimale und maximale Werkzeuggröße
stufenlos regelbar (optional)
Werkzeugtemperierung: 3 Heiz- und 2 Kühlzonen
Werkzeugtemperatur: bis 400 °C
Werkzeuglänge: 1000 mm
Öffnungsweg Presse: 0,5 bis 200 mm
Produktionsrichtung: rechts nach links

### Technische Daten der Schmelze-Plastifizierung:

Diskontinuierlicher Schmelzeauftrag in Mittellage zur Herstellung von faserverstärkten thermoplastischen
Halbzeugen
Schneckendurchmesser: 35mm
Max. Hubvolumen: 192 cm³
Max. Schneckendrehzahl: 350 U/min
Max. Austragsstrom: 108 cm³/s
Max. Austragsdruck: 2406 bar spezifisch
hierbei:
Schmelzevolumne: 22 ccm
isobar = druckgesteuerter Pressprozess
isochor = volumengesteuerter Pressprozess
   T [°C] = Temperatur der Temperaturzonen* (*Die Presse verfügt über 3 Heiz- und 2 Kühlzonen. Die Angabe bezieht in Produktionsrichtung)
   p [bar] = Pressdruck pro Zyklus: Isochor 20
   s [mm] = Wegbegrenzung Pressdicke: 1.1 mm
   Temperaturprofil:
   (i) 210 bis 245°C, daher ca. 220°C
   (ii) 300 bis 325°C, daher ca. 300°C
   (iii) 270 bis 320°C, daher ca. 280 bis 320°C
   (iv) 160 bis 180°C
   (v) 80°C
   t [sec] = Presszeit pro Zyklus: 20-30 s
   Aufbau/Laminierung: 6-lagiger Aufbau mit Schmelze-Mittelschicht; Herstellungsverfahren: Schmelze-Direkt (SD)

### Matrix-Komponenten A:

M1 (SAN Typ): Styrol-Acrylnitril-Maleinsäureanhydrid- (SAN-MA-) Terpolymer (S/AN/MA: 74/25/1) mit einem MA-Anteil von 1 Gew.-% und einem MVR von 22 cm³/10 min bei 220°C/10kg (gemessen nach ISO1133);
M1b entspricht der vorgenannten Komponente M1, wobei der Matrix zusätzlich 2 Gew.-% Industrieruß beigemischt wurden.

M2 (SAN Typ): Styrol-Acrylnitril-Maleinsäureanhydrid- (SAN-MA-) Terpolymer (S/AN/MA: 73/25/2,1) mit einem MA-Anteil von 2,1 Gew.-% und einem MVR von 22 cm³/10 min bei 220°C/10kg (gemessen nach ISO1133);
M2b entspricht der vorgenannten Komponente M2, wobei der Matrix zusätzlich 2 Gew.-% Industrieruß beigemischt wurden.

M3 (SAN Typ): Blend aus 33 Gew.-% M1 und 67 Gew.-% des SAN-Copolymers Luran VLN, daher 0,33 Gew.-% MaleinsäureanhydridMA) im gesamten Blend;
M3b entspricht der vorgenannten Komponente M3, wobei der Matrix zusätzlich 2 Gew.-% Industrieruß beigemischt wurden.

| | |
|---|---|
| PA6: | teilkristallines, leichtfließendes Polyamid Durethan B30S |
| PD(OD): | leichtfließendes, amorphes Polycarbonat optischer Grade für optische Discs); |

### Faser-Komponenten B:

Glasfilament-Köpergewebe (Kurzbezeichnungen: **GF-KG(LR)** bzw. **LR**), Köperbindung 2/2, Flächengewicht 290 g/m², Roving EC9 68tex, Finish TF-970, Lieferbreite 1000 mm (Typ: 01102 0800-1240; Hersteller: Hexcel, erhalten von: Lange + Ritter)
Glasfilament-Köpergewebe (Kurzbezeichnungen: **GF-KG(PD)** bzw. **PD**), Köperbindung 2/2, Flächengewicht 320 g/m², Roving 320tex, Finish 350, Lieferbreite 635 mm (Typ: EC14-320-350, Hersteller und Lieferant: PD Glasseide GmbH Oschatz)
Glasfilament-Gelege (Kurzbezeichnung: **GF-GE(Sae)** bzw. **Sae**) 0°/45°/90°/-45°, Flächengewicht 313 g/m², Haupt-Roving 300tex, Finish PA-Schlichte, Lieferbreite 655mm (Typ: X-E-PA-313-655, Nr. 7004344, Hersteller und Lieferant: Saertex GmbH&Co.KG)
Sae n.s. = Glasfilament-Gelege 300 g/m², Herstellerbezeichnung: Saertex new sizing, +45°/-45°/+45°/-45°
Glasfaservlies (Kurzbezeichnung: **GV50**), Flächengewicht 50 g/m², Faserdurchmesser 10 µm, Lieferbreite 640 mm (Typ: Evalith S5030, Hersteller und Lieferant: Johns Manville Europe)

### Visuelle Bewertung

Alle hergestellten Faserverbund-Werkstoffe ließen sich jeweils als (groß)flächige Organobleche in einem Endlosverfahren herstellen, die problemlos (in kaschierbare, transportübliche Maße wie etwa 1 m x 0,6 m) die zuschneidbar waren. Bei den transparenten Faserverbund-Werkstoffen war das eingebettete Fasermaterial bei detaillierter Betrachtung im Gegenlicht gerade erkennbar. Bei den Faserverbund-Werkstoffen mit (schwarz) eingefärbter Matrix war das eingebettete Fasermaterial auch bei näherer optischer Betrachtung im Gegenlicht nicht/kaum erkennbar.

### Mikroskopische Bewertung

Hierbei wurden Fehlstellen (Lunker, Einfall, etc.) über Auflichtmikroskopie und die Oberflächengüte über konfokale Laser-Scannning-Mikroskopie (LSM) bewertet. Mittels LSM wurde eine Aufsicht einer drei-dimensionalen (3D-)Höhenaufnahme (7,2 mm x 7,2 mm) des lokalen Messbereichs und eine zweidimensionalen (2D-)Darstellung der Höhenunterschiede nach Skalierung und Anwendung verschiedener Profilfilter erstellt. Messfehler und einen generellen Verzug/Schieflage der Probe wurden durch den Einsatz von Profilfiltern (Rauschfilter und Verkippungsfilter) ausgeglichen. Das 2D-Höhenprofil der Aufnahme wurde über definierte Messlinien durch integrierte Software in Linienprofile übertragen und computer-gestützt ausgewertet.

Es wurden Faserverbund-Werkstoffe mit jeweils vier in die jeweilige Matrix eingebetteten Lagen des entsprechenden Flächengebildes an Fasern (hier GF-KG(PD)(4) bzw. Sae(4)) hergestellt. Um die Vergleichbarkeit der Proben weiter zu erhöhen, wurden auf die hergestellten Faserverbund-Werkstoffe jeweils beidseitig ein dünnes Glasfaservlies (GV50, siehe oben) aufgebracht. Dieses hatte keinen merklichen Einfluss auf die mechanischen Eigenschaften.

Die Mittlere Wellentiefe (MW Wt) und der Raumittenwert (Ra) wurden für zahlreiche Faserverbund-Werkstoffe ermittelt. Es zeigte sich, dass die MW Wt für alle Faserverbund-Werkstoffe, bei denen die Matrix eine funktionale Komponente enthält, die mit den Fasern reagieren kann, deutlich < 10 µm ist, wohingegen sie bei Faserverbund-Werkstoffen mit vergleichbaren PA6- und PD(OD)-Matrices deutlich <10 µm ist. Auch die ermittelten Raumittenwerte waren deutlich niedriger für erfindungsgemäße Faserverbund-Werkstoffe. Beispielhaft zeigen dies die untenstehenden, gemessenen Werte.

**Tabelle 9. Messergebnisse der LSM-Vermessung mit SAN-Matrixsystem - Wellentiefe (Wt) und Raumittenwert (Ra)**

| | SAN(1) | | | | PC(1) | PA6(1) |
|---|---|---|---|---|---|---|
| Aufbau | +GF-KG(PD)(4) | | | | | |
| Komponenten | M1b+PD | M2+PD | M2b+PD | M3b+PD | PC(OD)+ PD | PA6+ PD |
| MW Wt | 7,141 | 7,187 | 5,181 | 5,425 | 11,745 | 12,323 |
| MW Ra | 3,995 | 4,415 | 4,17 | 3,451 | 6,406 | 4,968 |

Ebenso deutlich wurde dies, wenn anstelle des Gewebes ein Gelege (wie Sae) eingesetzt wird:

**Tabelle 10. Messergebnisse der LSM-Vermessung mit SAN-Matrixsystem - Wellentiefe (Wt) und Raumittenwert (Ra)**

| Aufbau | SAN(1) | | PA6(1) |
|---|---|---|---|
| Aufbau | +Sae(4) | | |
| Komponenten | M1b+Sae | M2b+Sae | |
| MW Wt | 5,535 | 5,205 | 17,05 |
| MW Ra | 4,261 | 4,24 | 4,861 |

In weiteren Versuchen wurde die Festigkeit in Kett- und in Schussrichtung gesondert untersucht. Es konnte gezeigt werden, dass die Faserverbund-Werkstoffe sowohl in Kett- wie auch in Schussrichtung sehr stabil sind. In Kettrichtung sind die faserverbund-Werkstoffe in der Regel noch stabiler als in Schussrichtung.

### Mechanische Eigenschaften

### Matrix-Komponenten A

Die Matrix-Komponenten A sind wie oben beschrieben.

### Faser-Komponenten B (sofern nicht oben beschrieben)

FG290 = Glasfilament-Gewebe 290g/m², Herstellerbezeichnung: Hexcel HexForce® 01202 1000 TF970
FG320 = Glasfilament-Gewebe 320g/m², Herstellerbezeichnung: PD Glasseide GmbH Oschatz EC14-320-350
Sae = MuAx313, Glasfilament-Gelege 300g/m², Herstellerbezeichnung: Saertex X-E-PA-313-655
Sae n.s. = Glasfilament-Gelege 300g/m², Herstellerbezeichnung: Saertex new sizing, +45°/-45°/+45°/-45°
Anzahl an Schichten (z.B. 4x = vier Schichten des jeweiligen Fasergeleges bzw. der jeweiligen Fasern)
Hergestellt wurden folgende transparente Faserverbund-Werkstoffe, in die jeweils flächiges Fasermaterial eingebracht wurde. Die hergestellten Faserverbund-Werkstoffe wiesen jeweils eine Dicke von etwa 1,1 mm auf. Um die Vergleichbarkeit der Proben weiter zu erhöhen, wurden auf die hergestellten Faserverbund-Werkstoffe jeweils beidseitig ein dünnes Glasfaservlies (GV50, siehe oben) aufgebracht. Dieses hat keinen merklichen Einfluss auf die mechanischen oder optischen Eigenschaften. Für die Proben wurden folgende Biegefestigkeiten nach DIN EN ISO 14125 ermittelt:

**Tabelle 11. Transparente Faserverbund-Werkstoffe - Biegefestigkeit**

| Nr. | Aufbau | Glasanteil [g/m²] | Matrix | Dicke [mm] | E-Modul | Biegefestigkeit |
|---|---|---|---|---|---|---|
| F/T_1 | 4xFG290 | 1260 | M2 | 1,09 | 18,41 | 658,89 |
| F/T_2 | 4xFG320 | 1380 | M2 | 1,09 | 18,17 | 634,32 |
| F/T_3 | 4xSae | 1352 | M2 | 1,16 | 18,44 | 444,33 |
| F/T_4 | Sae n.s. | | M2 | 1,17 | 15,93 | 621,04 |
| F/T_5 | 4xFG320 | 1380 | PC(OD) | 1,14 | 23,36 | 377,97 |

Hergestellt wurden zudem folgende schwarz eingefärbte Faserverbund-Werkstoffe, bei denen der Matrix 2 Gew.-% Industrieruß beigemischt und in die jeweils flächiges Fasermaterial eingebracht wurde. Die hergestellten Faserverbund-Werkstoffe wiesen jeweils eine Dicke von etwa 1,1 mm auf. Um die Vergleichbarkeit der Proben weiter zu erhöhen, wurden auf die hergestellten Faserverbund-Werkstoffe jeweils beidseitig ein dünnes Glasfaservlies (GV50, siehe oben) aufgebracht. Dieses hat keinen merklichen Einfluss auf die mechanischen oder optischen Eigenschaften. Für die Proben wurden folgende Biegefestigkeiten nach DIN EN ISO 14125 ermittelt:

**Tabelle 12. Intransparente Faserverbund-Werkstoffe - Biegefestigkeit**

| Nr. | Aufbau | Glasanteil [g/m²] | Matrix | Dicke [mm] | E-Modul | Biegefestigkeit |
|---|---|---|---|---|---|---|
| F/S_1 | 4xFG290 | 1260 | M2 | 1,07 | 21,61 | 661,73 |
| F/S_2 | 4xFG320 | 1380 | M2 | 1,20 | 22,70 | 673,99 |
| F/S_3 | 4xSae | 1352 | M2 | 1,15 | 14,92 | 385,21 |
| F/S_4 | 4xSae | 1352 | PA6 | 1,13 | 14,30 | 477,77 |
| F/S_5 | 4xFG320 | 1380 | PA6 | 1,11 | 16,95 | 471,97 |

Zusammenfassend zeigte sich, dass die eingesetzten Gewebe (FG290 und FG320) zu Faserverbund-Werkstoffen mit besonders hoher Biegefestigkeit verarbeitet werden können. Die erfindungsgemäßen Faserverbund-Werkstoffe, bei denen die Matrix eine mit den Fasern reagierende Komponenten (hier: Maleinsäureanhydrid (MA)) enthält, weisen eine signifikant höhere Biegefestigkeit auf als die Vergleichsformmassen ohne eine solche Komponente, wie etwa PC(OD) oder PA6.

Im Vergleich dazu wurde für den nicht-erfindungsgemäßen, mit Kurzglasfasern verstärkten Faserverbund-Werkstoff Luran 378P G7 lediglich eine Biegefestigkeit von 150 MPa gefunden, daher eine deutlich niedrigere Biegefestigkeit.

Zusätzlich wurde für die Faserverbund-Werkstoffe die Schlagzähigkeit bzw. das Durchstoßverhalten (Dart Test nach ISO 6603) ermittelt. Auch hier zeigten die Faserverbund-Werkstoffe eine hohe Stabilität von Fm >3000 N.

### Optionale Weiterverarbeitung

Es konnte auch experimentell gezeigt werden, dass die erhaltenen Faserverbund-Werkstoffe gut zu dreidimensionalen Halbzeugen umformbar waren, wie beispielsweise zu halbschalenförmigen Halbzeugen. Es zeigte sich zudem, dass die erhaltenen Faserverbund-Werkstoffe bedruckbar und kaschierbar waren.

### Zusammenfassung der Versuchsergebnisse

Die Evaluierung von unterschiedlichen Textilsystemen auf Glasfaserbasis mit unterschiedlichen Matrixsystemen zu einem Faserverbund-Werkstoff (Organoblech) hat gezeigt, dass gute Faserverbund-Werkstoffe (als Organobleche und daraus hergestellten Halbzeugen) reproduzierbar hergestellt werden können. Diese können farblos oder farbig hergestellt werden. Die Faserverbund-Werkstoffe zeigten gute bis sehr gute optische, haptische und mechanische Eigenschaften (etwa bezüglich ihrer Biegefestigkeit und Durchstoßfestigkeit). Mechanisch zeigten die Gewebe etwas größere Festigkeit und Steifigkeit als Gelege. Die Styrol-Copolymer-basierten Matrices (SAN-Matrices) führten tendenziell zu besseren Faserverbund-Werkstoffen bezüglich der den mechanischen Kennwerte als die alternativen Matrices wie PC und PA6. Die erfindungsgemäßen Faserverbund-Werkstoffe ließen sich halb- bzw. vollautomatisch mittels eines Endlosverfahrens herstellen. Die erfindungsgemäßen Faserverbund-Werkstoffe (Organobleche) lassen sich gut zu dreidimensional zu Halbzeugen umformen.

## Patentansprüche

1. Faserverbund-Werkstoff W, enthaltend:
(A) als Polymermatrix eine thermoplastische Polymerzusammensetzung A, die enthält:
(A1) mindestens ein Copolymer C, das Monomere A-I und Monomere A-II und optional weitere Monomere umfasst;
(A2) optional einen oder mehrere Farbstoffe F; und
(A3) optional einen oder mehrere Hilfsstoffe H; und
(B) Fasern B, deren Oberfläche funktionelle Gruppen B-I aufweist, die mit den Monomeren A-I, nicht aber mit den Monomeren A-II, eine kovalente Bindung eingehen,
wobei die Lichtdurchlässigkeit des Faserverbund-Werkstoffs W um mindestens 10% höher ist als bei einem vergleichbaren Faserverbund-Werkstoff W, bei dem die Monomere A-I vollständig durch Monomere A-II ersetzt sind, und wobei optional die Biegefestigkeit des Faserverbund-Werkstoffs W um mindestens 20% höher ist als bei einem vergleichbaren Faserverbund-Werkstoff W, bei dem die Monomere A-I vollständig durch Monomere A-II ersetzt sind.

2. Faserverbund-Werkstoff W nach Anspruch 1, wobei der Faserverbund-Werkstoff W besteht aus:
20-99.5 Gew.-% an thermoplastischer Polymerzusammensetzung A;
0,5-80 Gew.-% an Fasern B; und
0-79,5 Gew.-% an Polymer D.

3. Faserverbund-Werkstoff W nach einem der Ansprüche 1 oder 2, wobei das Copolymer C aufgebaut ist mit einem Anteil an Monomeren A-I von mindestens 0,1 Gew.-%, bevorzugt von mindestens 0,5 Gew.-%, insbesondere von mindestens 1 Gew.-%.

4. Faserverbund-Werkstoff W nach einem der Ansprüche 1 bis 3, wobei die thermoplastische Polymerzusammensetzung A zu mindestens 90 Gew.-%, bevorzugt zu mindestens 95 Gew.-%, insbesondere zu mindestens 98 Gew.-%, aus dem Copolymer C besteht.

5. Faserverbund-Werkstoff W nach einem der Ansprüche 1 bis 4, wobei die Monomere A-I ausgewählt sind aus der Gruppe bestehend aus Maleinsäureanhydrid (MA), N-Phenylmaleimid (PM), tert.-Butyl(meth)acrylat und Glycidyl(meth)acrylat (GM).

6. Faserverbund-Werkstoff W nach einem der Ansprüche 1 bis 5, wobei das Copolymer C ein Styrol-Copolymer C ist, das als Monomere A-II Styrol (S) enthält, bevorzugt wobei die thermoplastische Polymerzusammensetzung A umfasst:
0,1-5 Gew-% Maleinsäureanhydrid (MA) als Monomere A-I,
50-99,9 Gew-% Styrol (S) als Monomere A-II, und
0-49,9 Gew-% Acrylnitril (AN) als Monomere A-III,
insbesondere wobei das Styrol-Copolymer C besteht aus:
0,1-5 Gew-% Maleinsäureanhydrid (MA) als Monomere A-I,
65-85 Gew-% Styrol (S) als Monomere A-II,
10-34,9 Gew-% Acrylnitril (AN) als Monomere A-III.

7. Faserverbund-Werkstoff W nach einem der Ansprüche 1 bis 6, wobei die funktionellen Gruppen B-I an der Oberfläche der Fasern B ausgewählt sind aus Hydroxy-, Ester- und Aminogruppen, insbesondere wobei die Fasern B Glasfasern sind, die Hydroxygruppen in Form von Silanolgruppen als funktionelle Gruppen B-I an der Oberfläche aufweisen.

8. Faserverbund-Werkstoff W nach einem der Ansprüche 1 bis 7, wobei die Fasern B schichtweise in den Faserverbund-Werkstoff W eingebettet sind, bevorzugt als Gewebe oder Gelege in den Faserverbund-Werkstoff W eingebettet sind.

9. Faserverbund-Werkstoff W nach einem der Ansprüche 1 bis 8, wobei:
(A) die Polymermatrix A zu mindestens 75 Gew-% aus Styrol-Copolymer C besteht, das Maleinsäureanhydrid (MA) als Monomere A-I, Styrol (S) als Monomere A-II und bevorzugt Acrylnitril (AN) als Monomere A-III umfasst; und
(B) die Fasern B Glasfasern sind, die Hydroxygruppen in Form von Silanolgruppen als funktionelle Gruppen B-I an der Oberfläche aufweisen,
wobei die MA-Reste zumindest teilweise mit den Silanolgruppen an der Oberfläche der Fasern B verestert sind.

10. Faserverbund-Werkstoff W nach einem der Ansprüche 1 bis 9, wobei:
(a) die Lichtdurchlässigkeit des Faserverbund-Werkstoffs W um mindestens 15%, bevorzugt um mindestens 20 %, insbesondere um mindestens 25 %, höher ist als bei einem vergleichbaren Faserverbund-Werkstoff W, bei dem Monomere A-I vollständig durch Monomere A-II ersetzt sind; und/oder
(b) die Biegefestigkeit des Faserverbund-Werkstoffs W um mindestens 20%, bevorzugt um mindestens 25%, stärker bevorzugt um mindestens 30 %, insbesondere um mindestens 50 %, höher ist als bei einem vergleichbaren Faserverbund-Werkstoff W, bei dem die Monomere A-I vollständig durch Monomere A-II ersetzt sind.

11. Faserverbund-Werkstoff W nach einem der Ansprüche 1 bis 10, wobei bei der Herstellung des Faserverbund-Werkstoffs W kein Haftvermittler aus der Gruppe bestehend aus Aminosilanen und Epoxy-Verbindungen eingesetzt wurde.

12. Verfahren zur Herstellung eines Faserverbund-Werkstoffs W mit erhöhter Lichtdurchlässigkeit und optional erhöhter Biegefestigkeit, umfassend die Schritte:
(i) Bereitstellen von:
(A) einer thermoplastischen Polymerzusammensetzung A als Polymermatrix, die enthält:
(A1) mindestens ein Copolymer C, das Monomere A-I und Monomere A-II und optional weitere Monomere umfasst;
(A2) optional ein oder mehrere Farbstoffe F; und
(A3) optional ein oder mehrere Hilfsstoffe H; und
(B) Fasern B, deren Oberfläche funktionelle Gruppen B-I aufweist, die mit den Monomeren A-I, nicht aber mit den Monomeren A-II, eine kovalente Bindung eingehen können;
(ii) Schmelzen der thermoplastischen Polymerzusammensetzung A und Inkontaktbringen dieser mit den Fasern B aus Schritt (i); und
(iii) Reagieren der mindestens eines Teils der Monomere A-I des Copolymers C und mindestens eines Teils der funktionellen Gruppen B-I der Fasern B aus Schritt (ii) unter Ausbildung kovalenter Bindungen,
wobei die Lichtdurchlässigkeit des erhaltenen Faserverbund-Werkstoffs W um mindestens 15% höher ist als bei einem vergleichbaren Faserverbund-Werkstoff W, bei dem Monomere A-I vollständig durch Monomere A-II ersetzt sind.

13. Verfahren nach Anspruch 12, wobei ein Faserverbund-Werkstoff W wie in einem beliebigen der Ansprüche 1 bis 11 definiert hergestellt wird, insbesondere wobei der Faserverbund-Werkstoff W besteht aus:
20-99.5 Gew.-% an thermoplastischer Polymerzusammensetzung A; und
0,5-80 Gew.-% an Fasern B.

14. Verfahren nach einem der Ansprüche 12 oder 13, wobei das Copolymer C aufgebaut ist mit einem Anteil an Monomeren A-I von mindestens 0,1 Gew.-%, bevorzugt von mindestens 0,5 Gew.-%, insbesondere von mindestens 1 Gew.-%.

15. Verfahren nach einem der Ansprüche 12 bis 14, wobei die thermoplastische Polymerzusammensetzung A zu mindestens 90 Gew.-%, bevorzugt zu mindestens 95 Gew.-%, insbesondere zu mindestens 98 Gew.-%, aus dem Copolymer C besteht.

16. Verfahren nach einem der Ansprüche 12 bis 15, wobei die Monomere A-I ausgewählt sind aus der Gruppe bestehend aus Maleinsäureanhydrid (MA), N-Phenylmaleimid (PM), tert.-Butyl(meth)acrylat und Glycidyl(meth)acrylat (GM).

17. Verfahren nach einem der Ansprüche 12 bis 16, wobei das Copolymer C ein Styrol-Copolymer C ist, das als Monomere A-II Styrol (S) enthält, bevorzugt wobei die thermoplastische Polymerzusammensetzung A umfasst:
0,1-5 Gew-% Maleinsäureanhydrid (MA) als Monomere A-I,
50-99,9 Gew-% Styrol (S) als Monomere A-II, und
0-49,9 Gew-% Acrylnitril (AN) als Monomere A-III,
insbesondere wobei das Styrol-Copolymer C besteht aus:
0,1-5 Gew-% Maleinsäureanhydrid (MA) als Monomere A-I,
65-85 Gew-% Styrol (S) als Monomere A-II,
10-34,9 Gew-% Acrylnitril (AN) als Monomere A-III.

18. Verfahren nach einem der Ansprüche 12 bis 17, wobei die funktionellen Gruppen B-I an der Oberfläche der Fasern B ausgewählt sind aus Hydroxy-, Ester- und Aminogruppen, insbesondere wobei die Fasern B Glasfasern sind, die Hydroxygruppen in Form von Silanolgruppen als funktionelle Gruppen B-I an der Oberfläche aufweisen.

19. Verfahren nach einem der Ansprüche 12 bis 18, wobei die Fasern B schichtweise in den Faserverbund-Werkstoff W eingebettet werden, bevorzugt als Gewebe oder Gelege in den Faserverbund-Werkstoff W eingebettet werden.

20. Verfahren nach einem der Ansprüche 12 bis 19, wobei:
(A) die Polymermatrix A zu mindestens 75 Gew-% aus Styrol-Copolymer C besteht, das Maleinsäureanhydrid (MA) als Monomere A-I, Styrol (S) als Monomere A-II und bevorzugt Acrylnitril (AN) als Monomere A-III umfasst; und
(B) die Fasern B Glasfasern sind, die Hydroxygruppen in Form von Silanolgruppen als funktionelle Gruppen B-I an der Oberfläche aufweisen,
wobei die MA-Reste zumindest teilweise mit den Silanolgruppen an der Oberfläche der Fasern B verestert sind.

21. Verfahren nach einem der Ansprüche 12 bis 20, wobei:
(a) die Lichtdurchlässigkeit des erhaltenen Faserverbund-Werkstoffs W um mindestens 20 %, insbesondere um mindestens 25 %, höher ist als bei einem vergleichbaren Faserverbund-Werkstoff W, bei dem Monomere A-I vollständig durch Monomere A-II ersetzt sind; und/oder
(b) die Biegefestigkeit des Faserverbund-Werkstoffs W um mindestens 20%, bevorzugt um mindestens 25%, stärker bevorzugt um mindestens 30 %, insbesondere um mindestens 50 %, höher ist als bei einem vergleichbaren Faserverbund-Werkstoff W, bei dem die Monomere A-I vollständig durch Monomere A-II ersetzt sind.

22. Verfahren nach einem der Ansprüche 12 bis 21, wobei kein Haftvermittler aus der Gruppe bestehend aus Aminosilanen und Epoxy-Verbindungen eingesetzt wird.

23. Verfahren nach einem der Ansprüche 12 bis 22, bei dem die Schritte (ii) und (iii) gleichzeitig durchgeführt werden.

24. Verfahren nach einem der Ansprüche 12 bis 23, bei dem die Schritte (ii) und/oder (iii) bei einer Temperatur von mindestens 200°C, bevorzugt mindestens 250°C, stärker bevorzugt mindestens 300°C, insbesondere bei 300°C-340°C durchgeführt wird/werden.

25. Verfahren nach einem der Ansprüche 12 bis 24, bei dem bei der Durchführung der Schritte (ii) und/oder (iii) die Verweildauer bei Temperaturen von ≥ 200°C nicht mehr als 10 min, bevorzugt nicht mehr als 5 min, stärker bevorzugt nicht mehr als 2 min, insbesondere nicht mehr als 1 min beträgt.

26. Verfahren nach einem der Ansprüche 12 bis 25, bei dem die Schritte (ii) und/oder (iii) bei einem Pressdruck von 5-50 bar und einer Presszeit von 10-60 s, bevorzugt bei einem Pressdruck von 10-30 bar und einer Presszeit von 15-40 s, durchgeführt werden.

27. Verfahren nach einem der Ansprüche 12 bis 26, bei dem das Verfahren als weiteren Schritt (iv) eine dreidimensionale Formgebung zu einem Formteil T umfasst.

28. Verfahren nach einem der Ansprüche 12 bis 27, bei dem das Verfahren als kontinuierliches Verfahren durchgeführt wird, insbesondere als kontinuierliches Verfahren zu Herstellung von glatten oder dreidimensional geprägten Folien durchgeführt wird.

29. Faserverbund-Werkstoff W erhältlich nach einem Verfahren nach einem der Ansprüche 12 bis 28.

30. Faserverbund-Werkstoff W nach einem der Ansprüche 1 bis 11 oder Verfahren nach einem der Ansprüche 12 bis 21, wobei die Fasern B als Gewebe schichtweise in den Faserverbund-Werkstoff W eingebettet sind und wobei bei der Herstellung des Faserverbund-Werkstoffs W kein Haftvermittler aus der Gruppe bestehend aus Aminosilanen und Epoxy-Verbindungen eingesetzt wurde.

31. Faserverbund-Werkstoff W oder Verfahren nach Anspruch 30, wobei die thermoplastische Polymerzusammensetzung A umfasst:
0,1-5 Gew-% Maleinsäureanhydrid (MA) als Monomere A-I,
70-80 Gew-% Styrol (S) als Monomere A-II, und
15-29,9 Gew-% Acrylnitril (AN) als Monomere A-III.

## Claims

1. A fiber composite material W comprising:
(A) a polymer matrix in the form of a thermoplastic polymer composition A comprising:
(A1) at least one copolymer C comprising monomers A-I and monomers A-II and optionally further monomers;
(A2) optionally one or more dyes F; and
(A3) optionally one or more assistants H; and
(B) fibers B whose surface displays functional groups B-I which form a covalent bond with said monomers A-I, but not with said monomers A-II,
wherein the light transmission through said fiber composite material W is not less than 10% higher than with a comparable fiber composite material W where monomers A-II fully replace said monomers A-I, and wherein optionally the flexural strength of said fiber composite material W is not less than 20% higher than with a comparable fiber composite material W where monomers A-II fully replace said monomers A-I.

2. The fiber composite material W as claimed in claim 1 wherein said fiber composite material W consists of:
20-99.5 wt% of thermoplastic polymer composition A;
0.5-80 wt% of fibers B; and
0-79.5 wt% of polymer D.

3. The fiber composite material W as claimed in either of claims 1 and 2 wherein said copolymer C has a construction comprising not less than 0.1 wt%, preferably not less than 0.5 wt% and especially not less than 1 wt% of monomers A-I.

4. The fiber composite material W as claimed in any one of claims 1 to 3 wherein said thermoplastic polymer composition A comprises not less than 90 wt%, preferably not less than 95 wt% and especially not less than 98 wt% of said copolymer C.

5. The fiber composite material W as claimed in any one of claims 1 to 4 wherein said monomers A-I are selected from the group consisting of maleic anhydride (MA), N-phenylmaleimide (PM), tert-butyl (meth)acrylate and glycidyl (meth)acrylate (GM).

6. The fiber composite material W as claimed in any one of claims 1 to 5 wherein said copolymer C is a styrene copolymer C comprising styrene (S) as monomers A-II, preferably wherein said thermoplastic polymer composition A comprises:
0.1-5 wt% of maleic anhydride (MA) as monomers A-I,
50-99.9 wt% of styrene (S) as monomers A-II, and
0-49.9 wt% of acrylonitrile (AN) as monomers A-III,
especially wherein said styrene copolymer C consists of:
0.1-5 wt% of maleic anhydride (MA) as monomers A-I,
65-85 wt% of styrene (S) as monomers A-II,
10-34.9 wt% of acrylonitrile (AN) as monomers A-III.

7. The fiber composite material W as claimed in any one of claims 1 to 6 wherein said functional groups B-I at the surface of said fibers B are selected from hydroxyl groups, ester groups and amino groups, especially wherein said fibers B are glass fibers displaying hydroxyl groups in the form of silanol groups as functional groups B-I on the surface.

8. The fiber composite material W as claimed in any one of claims 1 to 7 wherein said fibers B embed into said fiber composite material W layerwise, preferably as woven or noncrimp fabric.

9. The fiber composite material W as claimed in any one of claims 1 to 8 wherein:
(A) said polymer matrix A comprises not less than 75 wt% of styrene copolymer C, maleic anhydride (MA) as monomers A-I, styrene (S) as monomers A-II and preferably acrylonitrile (AN) as monomers A-III; and
(B) said fibers B are glass fibers displaying hydroxyl groups in the form of silanol groups as functional groups B-I on the surface,
wherein the MA moieties are at least partly esterified with the silanol groups on the surface of said fibers B.

10. The fiber composite material W as claimed in any one of claims 1 to 9 wherein:
(a) the light transmission through said fiber composite material W is not less than 15%, preferably not less than 20% and especially not less than 25%, higher than with a comparable fiber composite material W where monomers A-II fully replace said monomers A-I; and/or
(b) the flexural strength of said fiber composite material W is not less than 20%, preferably not less than 25%, more preferably not less than 30% and especially not less than 50%, higher than with a comparable fiber composite material W where monomers A-II fully replace said monomers A-I.

11. The fiber composite material W as claimed in any one of claims 1 to 10 wherein no adhesion promoter from the group consisting of aminosilanes and epoxy compounds was used in the production of said fiber composite material W.

12. A method of producing a fiber composite material W having enhanced translucency and optionally enhanced flexural strength, said method comprising the steps of:
(i) providing:
(A) a polymer matrix in the form of a thermoplastic polymer composition A comprising:
(A1) at least one copolymer C comprising monomers A-I and monomers A-II and optionally further monomers;
(A2) optionally one or more dyes F; and
(A3) optionally one or more assistants H; and
(B) fibers B whose surface displays functional groups B-I which are capable of forming a covalent bond with said monomers A-I, but not with said monomers A-II;
(ii) melting said thermoplastic polymer composition A and contacting same with said fibers B from step (i); and
(iii) reacting at least some of said monomers A-I of said copolymer C and at least some of said functional groups B-I of said fibers B from step (ii) to form covalent bonds,
wherein the light transmission through said obtained fiber composite material W is not less than 15% higher than with a comparable fiber composite material W where monomers A-II fully replace said monomers A-I.

13. The method as claimed in claim 12 wherein a fiber composite material W as defined in any one of claims 1 to 11 is produced, especially wherein said fiber composite material W consists of:
20-99.5 wt% of thermoplastic polymer composition A; and
0,5-80 wt% of fibers B.

14. The method as claimed in either of claims 12 and 13 wherein said copolymer C has a construction comprising not less than 0.1 wt%, preferably not less than 0.5 wt% and especially not less than 1 wt% of monomers A-I.

15. The method as claimed in any one of claims 12 to 14 wherein said thermoplastic polymer composition A comprises not less than 90 wt%, preferably not less than 95 wt% and especially not less than 98 wt% of said copolymer C.

16. The method as claimed in any one of claims 12 to 15 wherein said monomers A-I are selected from the group consisting of maleic anhydride (MA), N-phenylmaleimide (PM), tert-butyl (meth)acrylate and glycidyl (meth)acrylate (GM).

17. The method as claimed in any one of claims 12 to 16 wherein said copolymer C is a styrene copolymer C comprising styrene (S) as monomers A-II, preferably wherein said thermoplastic polymer composition A comprises:
0.1-5 wt% of maleic anhydride (MA) as monomers A-I,
50-99.9 wt% of styrene (S) as monomers A-II, and
0-49.9 wt% of acrylonitrile (AN) as monomers A-III,
especially wherein said styrene copolymer C consists of:
0.1-5 wt% of maleic anhydride (MA) as monomers A-I,
65-85 wt% of styrene (S) as monomers A-II,
10-34.9 wt% of acrylonitrile (AN) as monomers A-III.

18. The method as claimed in any one of claims 12 to 17 wherein said functional groups B-I at the surface of said fibers B are selected from hydroxyl groups, ester groups and amino groups, especially wherein said fibers B are glass fibers displaying hydroxyl groups in the form of silanol groups as functional groups B-I on the surface.

19. The method as claimed in any one of claims 12 to 18 wherein said fibers B embed into said fiber composite material W layerwise, preferably as woven or noncrimp fabric.

20. The method as claimed in any one of claims 12 to 19 wherein:
(A) said polymer matrix A comprises not less than 75 wt% of styrene copolymer C, maleic anhydride (MA) as monomers A-I, styrene (S) as monomers A-II and preferably acrylonitrile (AN) as monomers A-III; and
(B) said fibers B are glass fibers displaying hydroxyl groups in the form of silanol groups as functional groups B-I on the surface,
wherein the MA moieties are at least partly esterified with the silanol groups on the surface of said fibers B.

21. The method as claimed in any one of claims 12 to 20 wherein:
(a) the light transmission through said fiber composite material W is not less than 20% and especially not less than 25%, higher than with a comparable fiber composite material W where monomers A-II fully replace said monomers A-I; and/or
(b) the flexural strength of said fiber composite material W is not less than 20%, preferably not less than 25%, more preferably not less than 30% and especially not less than 50%, higher than with a comparable fiber composite material W where monomers A-II fully replace said monomers A-I.

22. The method as claimed in any one of claims 12 to 21 wherein no adhesion promoter from the group consisting of aminosilanes and epoxy compounds is used.

23. The method as claimed in any one of claims 12 to 22 wherein said steps (ii) and (iii) are carried out concurrently.

24. The method as claimed in any one of claims 12 to 23 wherein said steps (ii) and/or (iii) are carried out at a temperature of not less than 200°C, preferably not less than 250°C, more preferably not less than 300°C and especially at 300°C-340°C.

25. The method as claimed in any one of claims 12 to 24 wherein said steps (ii) and/or (iii) are carried out such that the residence time at temperatures of ≥ 200°C is not more than 10 min, preferably not more than 5 min, more preferably not more than 2 min and especially not more than 1 min.

26. The method as claimed in any one of claims 12 to 25 wherein said steps (ii) and/or (iii) are carried out with a molding pressure of 5-50 bar and a molding time of 10-60 s, preferably with a molding pressure of 10-30 bar and a molding time of 15-40 s.

27. The method as claimed in any one of claims 12 to 26 wherein said method comprises a further step (iv) of three-dimensionally shaping to form a shaped part T.

28. The method as claimed in any one of claims 12 to 27 wherein said method is carried out as a continuous method, especially as a continuous method for production of smooth or three-dimensionally embossed sheets.

29. A fiber composite material W obtainable by a method as claimed in any one of claims 12 to 28.

30. The fiber composite material W as claimed in any one of claims 1 to 11 or method as claimed in any one of claims 12 to 21 wherein said fibers B embed layerwise as wovens into said fiber composite material W and wherein no adhesion promoter from the group consisting of aminosilanes and epoxy compounds was used in the production of said fiber composite material W.

31. The fiber composite material W or method as claimed in claim 30 wherein said thermoplastic polymer composition A comprises:
0.1-5 wt% maleic anhydride (MA) as monomers A-I,
70-80 wt% of styrene (S) as monomers A-II, and
15-29.9 wt% of acrylonitrile (AN) as monomers A-III.

## Revendications

1. Matériau composite fibreux W, comprenant:
(A) en tant que matrice polymère, une composition de polymère thermoplastique A contenant:
(A1) au moins un copolymère C qui comprend des monomères A-I et des monomères A-II et éventuellement d'autres monomères;
(A2) éventuellement un ou plusieurs colorants F; et
(A3) éventuellement un ou plusieurs agents auxiliaires H; et
(B) des fibres B dont la surface comporte des groupes fonctionnels B-I, formant une liaison covalente avec les monomères A-1, mais pas avec les monomères A-II,
- dans lequel matériau le facteur de transmission de la lumière du matériau composite fibreux W est supérieur d'au moins 10% à celui d'un matériau composite fibreux comparable W,
- dans lequel les monomères A-I sont complètement remplacés par des monomères A-II, et
- dans lequel la résistance à la flexion du matériau composite fibreux W est éventuellement d'au moins 20% supérieur à celle d'un matériau composite fibreux comparable W, dans lequel les monomères A-I sont complètement remplacés par des monomères A-II.

2. Matériau composite fibreux W selon la revendication 1, dans lequel le matériau composite fibreux W est constitué de:
20 à 99,5% en poids d'une composition de polymère thermoplastique A;
0,5 à 80% en poids de fibres B; et
0 à 79,5% en poids d'un polymère D.

3. Matériau composite fibreux W selon l'une quelconque des revendications 1 ou 2, dans lequel le copolymère C est formé avec une proportion de monomères AI d'au moins 0,1% en poids, de préférence d'au moins 0,5% en poids, en particulier d'au moins 1% en poids.

4. Matériau composite fibreux W selon l'une des revendications 1 à 3, dans lequel la composition de polymère thermoplastique A comporte au moins 90% en poids, de préférence au moins 95% en poids, en particulier au moins 98% en poids, consistant en le copolymère C.

5. Matériau composite fibreux W selon l'une quelconque des revendications 1 à 4, dans lequel les monomères A-I sont choisis dans le groupe constitué par l'anhydride de l'acide maléique (MA), la N-phénylmaléimide (PM), le (méth)acrylate de tert-butyle et le (méth)acrylate de glycidyle (GM).

6. Matériau composite fibreux W selon l'une quelconque des revendications 1 à 5, dans lequel le copolymère C est un copolymère de styrène C contenant comme monomères A-II le styrène (S), de préférence dans lequel la composition de polymère thermoplastique A comprend:
- 0,1-5% en poids d'anhydride de l'acide maléique (MA) en tant que monomères A-1
- 50 à 99,9% en poids de styrène (S) en tant que monomères A-II, et
- 0 à 49,9% en poids d'acrylonitrile (AN) en tant que monomères A-III,
en particulier dans lequel le copolymère de styrène C est constitué de:
- 0,1-5% en poids d'anhydride de l'acide maléique (MA) en tant que monomères A-1
- 65 à 85% en poids de styrène (S) en tant que monomères A-II,
- 10 à 34,9% en poids d'acrylonitrile (AN) en tant que monomères A-III.

7. Matériau composite fibreux W selon l'une quelconque des revendications 1 à 6, dans lequel les groupes fonctionnels B-I de la surface des fibres B sont choisis dans le groupe formé par les groupements hydroxy, ester et amino, en particulier dans lequel les fibres B sont des fibres de verre, qui comportent des groupements hydroxyles sous forme de groupes silanol, comme groupes fonctionnels B-I sur leur surface.

8. Matériau composite fibreux W selon l'une des revendications 1 à 7, dans lequel les fibres B forment des strates noyées dans le matériau composite fibreux W, de préférence forment un tissu ou un canevas noyé dans le matériau composite fibreux W.

9. Matériau composite fibreux W selon l'une quelconque des revendications 1 à 8, dans lequel:
(A) la matrice polymère A comprend au moins 75% en poids de copolymère de styrène C comprenant
∘ en tant que monomères A-I de l'anhydride de l'acide maléique (MA),
∘ en tant que monomères A-II du styrène (S) et
∘ en tant que monomères A-III de préférence de l'acrylonitrile (AN); et
(B) les fibres B sont des fibres de verre dont la surface comporte des groupes hydroxyle sous forme de groupes silanol en tant que groupes fonctionnels B-I
dans lequel la surface des fibres B des radicaux MA sont au moins partiellement estérifiés par des groupes silanol.

10. Matériau composite fibreux W selon l'une quelconque des revendications 1 à 9, dans lequel:
(a) le facteur de transmission lumineuse du matériau composite fibreux W est supérieure d'au moins 15%, de préférence d'au moins 20%, en particulier d'au moins 25%, à celle d'un matériau composite fibreux comparable W, dans lequel les monomères A-I sont complètement remplacés par des monomères A-II; et/ou
(b) la résistance à la flexion du matériau composite fibreux W est supérieure d'au moins 20%, de préférence d'au moins 25%, plus préférablement d'au moins 30%, en particulier d'au moins 50%, à celle d'un matériau composite de fibres comparable W dans lequel les monomères A-I sont complètement remplacées par les monomères A-II.

11. Matériau composite fibreux W selon l'une quelconque des revendications 1 à 10, dans lequel, dans la production du matériau composite fibreux W, n'a utilisé aucun promoteur d'adhérence du groupe constitué d'aminosilanes et de composés époxy.

12. Procédé de production d'un matériau composite fibreux W présentant un facteur de transmission de la lumière accru et éventuellement une résistance accrue à la flexion, comprenant les étapes consistant à:
(I) fournir:
(A) une composition de polymère thermoplastique A sous forme de matrice polymère, qui contient:
(A1) au moins un copolymère C, qui contient les monomères A-I et les monomères A-II et éventuellement d'autres monomères;
(A2) éventuellement un ou plusieurs colorants F; et
(A3) éventuellement un ou plusieurs agents auxiliaires H; et
(B) des fibres B dont la surface comporte des groupes fonctionnels B-I capables de se lier de manière covalente avec les monomères A-1, mais pas avec les monomères A-II;
(ii) faire fondre la composition de polymère thermoplastique A et la mettre en contact avec les fibres B de l'étape (i); et
(iii) faire réagir au moins une partie des monomères A-I du copolymère C et au moins une partie des groupes fonctionnels B-I des fibres B de l'étape (ii) pour former des liaisons covalentes,
dans lequel procédé le facteur de transmission de la lumière du matériau composite fibreux W obtenu est supérieur d'au moins 15% à celui d'un matériau composite fibreux comparable W, dans lequel les monomères A-I sont complètement remplacés par des monomères A-II.

13. Procédé selon la revendication 12, dans lequel est produit un matériau composite fibreux W, tel que défini dans l'une quelconque des revendications 1 à 11, en particulier dans lequel le matériau composite fibreux W consiste en:
- 20 à 99,5% en poids de la composition de polymère thermoplastique A; et
- 0,5 à 80% en poids de fibres B.

14. Procédé selon l'une quelconque des revendications 12 ou 13, dans lequel le copolymère C produit avec une proportion de monomères A-I d'au moins 0,1% en poids, de préférence d'au moins 0,5% en poids, en particulier d'au moins 1% en poids.

15. Procédé selon l'une quelconque des revendications 12 à 14, dans lequel la composition de polymère thermoplastique A consiste en au moins 90% en poids, de préférence au moins 95% en poids, en particulier au moins 98% en poids, de copolymère C.

16. Procédé selon l'une quelconque des revendications 12 à 15, dans lequel les monomères A-I sont choisis dans le groupe constitué par l'anhydride de l'acide maléique (MA), la N-phénylmaléimide (PM), le (méth)acrylate de tert-butyle et le (méth)acrylate de glycidyle (GM).

17. Procédé selon l'une quelconque des revendications 12 à 16, dans lequel le copolymère C est un copolymère de styrène C contenant comme monomères A-II le styrène (S), de préférence dans lequel la composition de polymère thermoplastique A comprend:
- 0,1-5% en poids d'anhydride de l'acide maléique (MA) en tant que monomères A-1
- 50 à 99,9% en poids de styrène (S) en tant que monomères A-II, et
- 0 à 49,9% en poids d'acrylonitrile (AN) en tant que monomères A-III,
en particulier dans lequel le copolymère de styrène C est constitué de:
- 0,1-5% en poids d'anhydride de l'acide maléique (MA) en tant que monomères A-1
- 65 à 85% en poids de styrène (S) en tant que monomères A-II,
- 10 à 34,9% en poids d'acrylonitrile (AN) en tant que monomères A-III.

18. Procédé selon l'une quelconque des revendications 12 à 17, dans lequel les groupes fonctionnels B-I de la surface des fibres B sont choisis dans le groupe formé par les groupements hydroxy, ester et amino, en particulier dans lequel les fibres B sont des fibres de verre, qui comportent des groupements hydroxyles sous forme de groupes silanol, comme groupes fonctionnels B-I sur leur surface.

19. Procédé selon l'une quelconque des revendications 12 à 18, dans lequel les fibres B forment des strates noyées dans le matériau composite fibreux W, de préférence forment un tissu ou canevas noyé dans le matériau composite fibreux W.

20. Procédé selon l'une quelconque des revendications 12 à 19, dans lequel:
(A) la matrice polymère A comprend au moins 75% en poids de copolymère de styrène C comprenant
∘ en tant que monomères A-I de l'anhydride de l'acide maléique (MA),
∘ en tant que monomères A-II du styrène (S) et
∘ en tant que monomères A-III de préférence de l'acrylonitrile (AN); et
(B) les fibres B sont des fibres de verre dont la surface comporte des groupes hydroxyle sous forme de groupes silanol en tant que groupes fonctionnels B-I
dans lequel la surface des fibres B des radicaux MA sont au moins partiellement estérifiés par des groupes silanol.

21. Procédé selon l'une quelconque des revendications 12 à 20, dans lequel:
(a) le facteur de transmission lumineuse du matériau composite fibreux W est supérieure d'au moins 20%, de préférence d'au moins 25%, à celle d'un matériau composite fibreux comparable W, dans lequel les monomères A-I sont complètement remplacés par des monomères A-II; et/ou
(b) la résistance à la flexion du matériau composite fibreux W est supérieure d'au moins 20%, de préférence d'au moins 25%, plus préférablement d'au moins 30%, en particulier d'au moins 50%, à celle d'un matériau composite de fibres comparable W dans lequel les monomères A-I sont complètement remplacés par les monomères A-II.

22. Procédé selon l'une quelconque des revendications 12 à 21, dans lequel n'est utilisé aucun promoteur d'adhérence du groupe constitué d'aminosilanes et de composés époxy.

23. Procédé selon l'une quelconque des revendications 12 à 22, dans lequel les étapes (ii) et (iii) sont réalisées simultanément.

24. Procédé selon l'une quelconque des revendications 12 à 23, dans lequel les étapes (ii) et/ou (iii) est/sont mises en oeuvre à une température d'au moins 200°C, de préférence d'au moins 250°C, de manière davantage préférée d'au moins 300°C, en particulier entre 300°C et 340°C.

25. Procédé selon l'une quelconque des revendications 12 à 24, dans lequel, lors de la réalisation des étapes (ii) et/ou (iii), le temps de séjour à des températures ≥200°C ne dépasse pas 10 minutes, de préférence pas plus de 5 minutes, plus préférablement pas plus de 2 minutes, en particulier pas plus de 1 minute.

26. Procédé selon l'une quelconque des revendications 12 à 25, dans lequel les étapes (ii) et/ou (iii) sont mises en oeuvre à une pression de 5 à 50 bars et une durée de compression de 10 à 60 sec, de préférence à une pression de compression de 10 à 30 bars et un temps de pression de 15 à 40 s.

27. Procédé selon l'une quelconque des revendications 12 à 26, dans lequel le procédé comprend une étape supplémentaire (iv) de mise sous forme tridimensionnelle pour réaliser un moulage T.

28. Procédé selon l'une quelconque des revendications 12 à 27, dans lequel le procédé est mis en oeuvre en tant que processus continu, en particulier en tant que processus continu pour produire des films lisses ou gaufrés en trois dimensions.

29. Matériau composite fibreux W pouvant être obtenu par un procédé selon l'une quelconque des revendications 12 à 28.

30. Matériau composite fibreux W selon l'une quelconque des revendications 1 à 11 ou procédé selon l'une des revendications 12 à 21, dans lequel les fibres B forment des strates noyées dans le matériau composite fibreux W, et dans lequel, dans la fabrication du matériau composite fibreux W, n'a été utilisé aucun promoteur d'adhérence du groupe constitué d'aminosilanes et de composés époxy.

31. Matériau composite fibreux W ou procédé selon la revendication 30, dans lequel la composition de polymère thermoplastique A comprend :
- 0,1-5% en poids d'anhydride de l'acide maléique (MA) en tant que monomères A-1
- 70 à 80% en poids de styrène (S) en tant que monomères A-II, et
- 15 à 29,9% en poids d'acrylonitrile (AN) en tant que monomères A-III.
